(19) Europäisches Patentamt
European Patent Office
Office européen des brevets

(11) EP 3 760 320 A1

(12) # EUROPEAN PATENT APPLICATION
published in accordance with Art. 153(4) EPC

(43) Date of publication:
**06.01.2021 Bulletin 2021/01**

(21) Application number: **19760703.9**

(22) Date of filing: **27.02.2019**

(51) Int Cl.:
***B05D 1/36*** *(2006.01)* ***B05D 7/24*** *(2006.01)*

(86) International application number:
**PCT/JP2019/007606**

(87) International publication number:
**WO 2019/168041 (06.09.2019 Gazette 2019/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.03.2018 JP 2018037393**
**02.03.2018 JP 2018037469**

(71) Applicant: **Kansai Paint Co., Ltd**
**Amagasaki-shi, Hyogo 661-8555 (JP)**

(72) Inventors:
- **MORI, Kenji**
**Hiratsuka-shi, Kanagawa 254-8562 (JP)**
- **FURUSAWA, Satoru**
**Hiratsuka-shi, Kanagawa 254-8562 (JP)**

(74) Representative: **Müller-Boré & Partner Patentanwälte PartG mbB**
**Friedenheimer Brücke 21**
**80639 München (DE)**

(54) **COATING METHOD AND COATING MATERIAL COMPOSITION**

(57) This invention relates to a coating method comprising sequentially applying a paint (X) and a paint (Y) to a substrate, and thermally curing two layers simultaneously, wherein the paint (X) contains a binder (XA), the paint (Y) contains a binder (YA) and an alkoxysilyl-containing organopolysiloxane (YB), the alkoxysilyl-containing organopolysiloxane (YB) has a solids content of 0.01 to 20 mass% based on the resin solids content of the binder (YA), and at least one of the paint (X) and the paint (Y) contains a catalyst (C) that promotes hydrolysis condensation of alkoxysilyl.



Printed by Jouve, 75001 PARIS (FR)

## Description

### Technical Field

The present invention relates to a coating method and a paint composition, whereby excellent stain resistance and stain resistance durability can be achieved by imparting water repellency to, for example, the coating surfaces of vehicle bodies, trucks, motorcycles, buses, vehicle parts, railway cars, industrial equipment, buildings, structures, and the like, and the appearance of the coating surfaces can be protected for a long period of time.

### Background Art

Wax coating is widely performed to protect the coating surfaces of vehicle bodies and the like and to impart luster to them. In general, wax has the effect of improving the luster of the coating surface immediately after coating; however, it is difficult to maintain the initial luster for a long period of time, and it is necessary to apply wax regularly.

In contrast, coating surfaces formed on vehicle bodies are often stained by the effects of weather, such as rain, snow, sleet, and ice formation; and environmental pollutants, such as fog, dirt, dust, air pollutants, and bird droppings. It has been required to develop a simple paint and/or coating method for making these stains unnoticeable.

As one measure, for example, PTL 1 discloses a surface treatment agent comprising an acrylic resin having a hydrolysable silyl group, a hydroxyl group, and a polysiloxane chain; an organopolysiloxane having a hydrolysable silyl group; and an organopolysiloxane not having a hydrolysable silyl group. However, curability, storage stability, and antifouling durability are not sufficiently satisfied in some cases.

Further, PTL 2 discloses a specific organopolysiloxane composition as a restoring and lustering agent for deteriorated coating films and small flaws for automobiles. PTL 2 indicates that the use of the composition makes it possible to restore deteriorated coating films, and to form highly durable coating films with excellent luster. However, since the composition contains large amounts of volatile components, the volatile components tend to volatilize after coating, resulting in a significant decrease in the volume of the coating film over time. This causes problems that when the lustering agent is applied to, for example, recesses of scratches formed on a coating surface, the coating film shrinks as it dries, many of the recesses of the scratches are exposed again, the lustering effect decreases over time, thereby causing the film to easily become dirty, and it is difficult to wipe off the adhering dirt components.

### Citation List

### Patent Literature

PTL 1: WO2006/001510
PTL 2: JPH10-36771A

## Summary of Invention

### Technical Problem

The problem to be solved by the present invention is to provide a coating method and a paint composition, whereby a paint having excellent storage stability can be obtained, a coating film having excellent stain resistance and durability can be obtained, and the appearance of the coating film can be protected for a long period of time.

### Solution to Problem

In order to solve the above problem, the present invention encompasses the subject matter set forth in the following items.

Item 1. A coating method comprising sequentially applying a paint (X) and a paint (Y) to a substrate, and thermally curing two layers simultaneously,
wherein
the paint (X) contains a binder (XA),
the paint (Y) contains a binder (YA) and an alkoxysilyl-containing organopolysiloxane (YB),
the alkoxysilyl-containing organopolysiloxane (YB) has a solids content of 0.01 to 20 mass% based on the resin

solids content of the binder (YA), and
at least one of the paint (X) and the paint (Y) contains a catalyst (C) that promotes hydrolysis condensation of alkoxysilyl.

Item 2. The coating method according to Item 1, wherein the paint (X) contains the catalyst (C) that promotes hydrolysis condensation of alkoxysilyl.

Item 3. The coating method according to Item 1, wherein the paint (Y) contains the catalyst (C) that promotes hydrolysis condensation of alkoxysilyl.

Item 4. The coating method according to any one of Items 1 to 3, wherein the binder (XA) contains a hydroxy-containing resin (XA-1) and/or a curing agent (XA-2).

Item 5. The coating method according to any one of Items 1 to 4, wherein the binder (YA) contains a hydroxy-containing resin (YA-1) and a curing agent (YA-2).

Item 6. The coating method according to any one of Items 2 to 5, wherein the catalyst (C) contains at least one phosphate compound, and the at least one phosphate compound has a number average molecular weight of 2000 or less.

Item 7. The coating method according to any one of Items 1 to 6, wherein the alkoxysilyl-containing organopolysiloxane (YB) has a number average molecular weight of 500 to 2000.

Item 8. The coating method according to any one of Items 5 to 7, wherein the hydroxy-containing resin (YA-1) contains at least one silyl-containing acrylic resin (YA-1-3).

Item 9. The coating method according to Item 5, wherein the binder (YA) contains the curing agent (YA-2), and the curing agent (YA-2) is at least one member selected from the group consisting of a melamine resin, a polyisocyanate compound, and a blocked polyisocyanate compound.

Item 10. The coating method according to any one of Items 1 to 9, wherein a coating film (Y*) of the paint (Y) has a cured film thickness of 10 μm or more, and a maximum spectral peak value of silicon (PS) and a maximum spectral peak value of carbon (PC), both present within 1 μm from a surface in contact with air, obtained by high-frequency glow discharge optical emission spectroscopy for element concentration analysis of the coating film (Y*) in the depth direction, satisfy the following formula:

$$PS/(PS + PC) \geq 0.3.$$

Item 11. A multi-component paint composition comprising a polysiloxane-containing component (I) and a catalyst-containing component (II),
wherein
the polysiloxane-containing component (I) or the catalyst-containing component (II), or both, contain a binder (YA),
the polysiloxane-containing component (I) contains an alkoxysilyl-containing organopolysiloxane (YB),
the catalyst-containing component (II) contains a catalyst (YC) that promotes hydrolysis condensation of alkoxysilyl, and
the alkoxysilyl-containing organopolysiloxane (YB) has a solids content of 0.01 to 20 mass% based on the resin solids content of the binder (YA).

Item 12. The paint composition according to Item 11, wherein the binder (YA) contains a hydroxy-containing resin (YA-1) and a curing agent (YA-2), and
wherein the paint composition comprises the following combination (1) or (2):

(1) the polysiloxane-containing component (I) containing the hydroxy-containing resin (YA-1), and the catalyst-containing component (II) containing the curing agent (YA-2); or
(2) the polysiloxane-containing component (I) containing the curing agent (YA-2), and the catalyst-containing component (II) containing the hydroxy-containing resin (YA-1).

Item 13. The paint composition according to Item 11 or 12, wherein the alkoxysilyl-containing organopolysiloxane (YB) has a number average molecular weight of 500 to 2000.

Item 14. The paint composition according to any one of Items 11 to 13, wherein the hydroxy-containing resin (YA-1) contains a silyl-containing acrylic resin (YA-1-3).

Item 15. The paint composition according to any one of Items 12 to 14, wherein the curing agent (YA-2) is a polyisocyanate compound.

Item 16. The paint composition according to any one of Items 11 to 15, wherein a dry coating film obtained by applying the paint composition has a film thickness of 10 μm or more, and a maximum spectral peak value of silicon (PS) and a maximum spectral peak value of carbon (PC), both present within 1 μm from a surface in contact with air, obtained by high-frequency glow discharge optical emission spectroscopy for element concentration analysis

of the coating film in the depth direction, satisfy the following formula:

$$PS/(PS + PC) \geq 0.3.$$

Item 17. The paint composition according to any one of Items 11 to 16, wherein a coating film obtained by a method comprising applying the paint composition to a polypropylene plate, and peeling the resulting film off from the polypropylene plate after thermal curing at 140°C for 30 minutes has water and paraffin contact angles (front surface, back surface) that satisfy all of the following (1) to (4):

(1) a water contact angle of a front surface of the coating film ≥ 90°,
(2) a water contact angle of the front surface of the coating film > a water contact angle of a back surface of the coating film + 10°,
(3) a paraffin contact angle of the front surface of the coating film ≥ 40°, and
(4) a paraffin contact angle of the front surface of the coating film > a paraffin contact angle of the back surface of the coating film + 10°,

wherein a surface on the atmosphere side serves as the front surface, and a surface on the polypropylene plate side serves as the back surface.
Item 18. The paint composition according to any one of Items 11 to 17, having a toluene extraction rate of 50% or less, the toluene extraction rate being measured as follows: the paint composition is applied to a tin plate degreased in advance to a cured film thickness of 35 μm, the resulting product is allowed to stand at room temperature for 7 minutes and then heated at 140°C for 30 minutes to obtain a dry coating film, a 5-cm × 5-cm surface of the obtained dry coating film is scraped off in an amount of about 0.05 g with a razor blade and placed in a 10-cc mayonnaise bottle, 2.5 ml of toluene is added, the resulting mixture is allowed to stand for 2 hours, 1 ml of the supernatant is weighed, the entire amount of the weighed supernatant is impregnated into filter paper to perform X-ray fluorescence analysis, and Si content is quantified from a calibration curve measured in advance,
wherein

$$\text{toluene extraction rate (\%)} = (P_1 \times Q)/(P_2 \times R \times S) \times 100,$$

wherein $P_1$ represents a volume (ml) of toluene used for extracting the Si component from the coating film,
Q represents the Si content (g) quantified by X-ray fluorescence analysis,
$P_2$ represents a volume (ml) of toluene used in X-ray fluorescence analysis,
R represents a solids content (mass%) of the alkoxysilyl-containing organopolysiloxane (YB) based on the resin solids content of the binder (YA), and
S represents a mass (g) of the scraped coating film.

Item 19. A coating method comprising applying the paint composition of any one of Items 11 to 18 to a substrate after mixing the polysiloxane component (I) and the catalyst component (II).

## Advantageous Effects of Invention

Coating films obtained using the coating method and the paint composition of the present invention have excellent stain resistance and durability. Specifically, coating films obtained by the coating method of the present invention have an excellent finish and can maintain their finished appearance for a long period of time even after being exposed to the effects of weather, such as rain, snow, sleet, and ice formation; and environmental pollutants, such as fog, dirt, dust, air pollutants, and bird droppings.

## Description of Embodiments

Embodiments of the present invention will now be described in detail below. However, the present invention is not limited to these embodiments. It should be understood that the invention includes various modifications that may be practiced without departing from the spirit of the invention.
In the present specification, a coating film of the paint (X) may be referred to as a "coating film (X*)," and a coating film of the paint (Y) may be referred to as a "coating film (Y*)." Further, the coating film (X*) and the coating film (Y*) may be collectively referred to as a "multilayer coating film."

In the present specification, the term "(meth)acrylate" refers to acrylate and/or methacrylate, and the term "(meth)acrylic acid" refers to acrylic acid and/or methacrylic acid. The term "(meth)acryloyl" refers to acryloyl and/or methacryloyl. The term "(meth)acrylamide" refers to acrylamide and/or methacrylamide.

## 1. Coating Method

A first embodiment of the present invention provides a coating method comprising sequentially applying a paint (X) and a paint (Y) to a substrate, and thermally curing two uncured layers, i.e., a layer of a coating film of the paint (X) and a layer of a coating film of the paint (Y), simultaneously,
wherein
the paint (X) contains a binder (XA),
the paint (Y) contains a binder (YA) and an alkoxysilyl-containing organopolysiloxane (YB),
the alkoxysilyl-containing organopolysiloxane (YB) has a solids content of 0.01 to 20 mass% based on the resin solids content of the binder (YA), and
at least one of the paint (X) and the paint (Y) contains a catalyst (C) that promotes hydrolysis condensation of alkoxysilyl.
The paint (X) may contain the catalyst (C) that promotes hydrolysis condensation of alkoxysilyl, the paint (Y) may contain the catalyst (C) that promotes hydrolysis condensation of alkoxysilyl, or the paint (X) and the paint (Y) may both contain the catalyst (C) that promotes hydrolysis condensation of alkoxysilyl.
The catalyst (C) that promotes hydrolysis condensation of alkoxysilyl contained in an uncured coating film (X*) of the paint (X) is eluted into an upper coating film (Y*) after the paint (Y) is applied and before thermal curing is performed, or the catalyst (C) that promotes hydrolysis condensation of alkoxysilyl contained in an uncured coating film (Y*) of the paint (Y) functions within the coating film (Y*) as a dehydration condensation catalyst for the alkoxysilyl-containing organopolysiloxane (YB). This allows the alkoxysilyl-containing organopolysiloxane (YB) in the coating film (Y*) to be cured, and enables the obtained multilayer coating film to have excellent stain resistance. The term "stain resistance" refers to, for example, a property of preventing stains from adhering or a property of removing stains, or both. In particular, when the paint (X) contains the catalyst (C) that promotes hydrolysis condensation of alkoxysilyl, and the paint (Y) does not contain the catalyst (C) that promotes hydrolysis condensation of alkoxysilyl, the paint (Y) has excellent storage stability.
In the present specification, the term "uncured coating film" refers to a film that has not yet reached a cross-linked state and is in a set-to-touch condition or in a dry-to-touch condition according to JIS K 5600-1-1.
The coating film (Y*) of the paint (Y) has a cured film thickness of 10 μm or more, and a maximum spectral peak value of silicon (PS) and a maximum spectral peak value of carbon (PC), both present within 1 μm from a surface in contact with air, obtained by high-frequency glow discharge optical emission spectroscopy (GDS) for element concentration analysis of the coating film (Y*) in the depth direction, preferably satisfy the following formula:

$$PS/(PS + PC) \geq 0.3.$$

The value of the formula: PC/(PS + PC) is more preferably 0.4 or more, and particularly preferably 0.5 or more.
Within the above range, the alkoxysilyl-containing organopolysiloxane (and optionally contained silyl-containing acrylic resin) will be assembled at the outermost layer of the coating film, achieving excellent stain resistance.
In the present invention, the high-frequency glow discharge optical emission spectroscopy (GDS) is measured using a GD-Profiler2 produced by HORIBA, Ltd.
Examples of the coating methods of the paint (X) and the paint (Y) include known methods such as atomization coating (air-spray coating, airless spray coating, rotary atomization coating), brush coating, dip coating, and roll coating. The coating method of the paint (X) and the coating method of the paint (Y) may be the same or different.
The substrate to which the paint (X) can be applied is not particularly limited. Examples include vehicle bodies, trucks, motorcycles, buses, vehicle parts, railway cars, industrial equipment, buildings, structures, and the like. The surface of the substrate to which the paint (X) can be applied is not particularly limited. Examples include a front surface of the substrates, a surface of various base materials, and a surface of cured or uncured coating films of paints.
Examples of base materials include metals, such as iron, zinc, iron-zinc alloys, and steel plates; inorganic base materials, such as wood, concrete, gypsum board, slate, siding materials, porcelain tile wall surfaces, lightweight cellular concrete, mortar, brick, stone materials, and glass; plastic base materials; leather; fibers; and the like.
The surface of cured or uncured coating films of paints is not particularly limited. Examples include a top coating film formed by applying a solid color paint, a top coating film formed by applying a metallic paint, a top coating film formed by applying an interference paint, a top coating film formed by applying a clear paint, a multilayer coating film formed by sequentially applying two or more topcoat paints selected from solid color paints, metallic paints, and clear paints, and the like.

Before applying the paint (Y), an uncured coating film (X*) obtained by applying the paint (X) to the substrate may be subjected to preheating (preliminary drying) or air blowing under conditions in which the coating film (X*) is not substantially cured. Preheating is preferably performed at about 40 to 100°C, more preferably about 50 to 90°C, and still more preferably about 60°C or more and less than 80°C, for preferably about 30 seconds to 15 minutes, and more preferably about 1 to 10 minutes. The air blowing can be usually performed by blowing air heated to an ordinary temperature or to a temperature of about 25 to 80°C for about 30 seconds to 15 minutes to the coating surface of the substrate.
Thereafter, the paint (Y) is applied to the uncured coating film (X*) to form a coating film (Y*), and preheating (preliminary drying) or air blowing is performed as described above, if necessary.
Finally, the uncured coating film (X*) and the uncured coating film (Y*) are heated to thus cure the multilayer coating film.
The uncured coating film (X*) and the uncured coating film (Y*) can be cured by a general-purpose coating-film heating (baking) method, such as hot-air heating, infrared heating, or high-frequency heating.
The uncured coating film (X*) and the uncured coating film (Y*) are preferably heated at a temperature of 70 to 200°C, more preferably 80 to 160°C, for preferably 10 to 60 minutes, and more preferably 15 to 40 minutes. Under the above conditions, the uncured coating film (X*) and the uncured coating film (Y*) are cured.
The coating film (X*) of the paint (X) has a cured film thickness (which may be referred to below as "film thickness") of preferably 1 to 50 μm, and preferably 10 to 40 μm. The coating film (Y*) of the paint (Y) has a film thickness of preferably 1 to 50 μm, and more preferably 10 to 40 μm.

Paint (X)

The paint (X) that can be used in the coating method of the present invention contains a binder (XA).

Binder (XA)

The binder (XA) preferably contains a hydroxy-containing resin (XA-1) and/or a curing agent (XA-2). The curing agent (XA-2) is an optional component. When the paint (X) does not contain the curing agent (XA-2), the curing agent contained in the paint (Y) used for forming an upper layer soaks into an uncured coating film (X*) to cure the coating film (X*) .

Hydroxy-containing Resin (XA-1)

Examples of the types of the hydroxy-containing resin (XA-1) include hydroxy-containing acrylic resins, polyester resins, urethane resins, epoxy resins, polyether resins, alkyd resins, polycarbonate resins, fluorine resins, and composite resins thereof. In particular, a hydroxy-containing acrylic resin (XA-1-1) and/or a hydroxy-containing polyester resin (XA-1-2) are preferable.
The amount of the hydroxy-containing resin (XA-1) is usually 1 to 100 mass%, and preferably 1 to 50 mass% based on the solids content of the binder (XA).

Hydroxy-containing Acrylic Resin (XA-1-1)

The hydroxy-containing acrylic resin (XA-1-1) can be produced by copolymerizing a hydroxy-containing polymerizable unsaturated monomer and a polymerizable unsaturated monomer other than the hydroxy-containing polymerizable unsaturated monomer.
Examples of the hydroxy-containing polymerizable unsaturated monomer include monoesterified products of (meth)acrylic acid with a dihydric alcohol having 2 to 8 carbon atoms (e.g., 2-hydroxyethyl (meth)acrylate, 2-hydroxypropyl (meth)acrylate, 3-hydroxypropyl (meth)acrylate, and 4-hydroxybutyl (meth)acrylate); ε-caprolactone-modified products of such monoesterified products of (meth)acrylic acid with a dihydric alcohol having 2 to 8 carbon atoms; N-hydroxymethyl (meth)acrylamide; allyl alcohol; (meth)acrylates that include a hydroxy-terminated polyoxyalkylene chain; and the like. These may be used alone or in a combination of two or more.
Examples of the polymerizable unsaturated monomer other than the hydroxy-containing polymerizable unsaturated monomer include alkyl (meth)acrylates containing 3 or less carbon atoms, such as methyl (meth)acrylate, ethyl (meth)acrylate, n-propyl (meth)acrylate, and isopropyl (meth)acrylate; alkyl or cycloalkyl (meth)acrylates, such as n-butyl (meth)acrylate, i-butyl (meth)acrylate, t-butyl (meth)acrylate, n-hexyl (meth)acrylate, octyl (meth)acrylate, 2-ethylhexyl (meth)acrylate, nonyl (meth)acrylate, tridecyl (meth)acrylate, lauryl (meth)acrylate, stearyl (meth)acrylate, isostearyl (meth)acrylate, cyclohexyl (meth)acrylate, methylcyclohexyl (meth)acrylate, t-butylcyclohexyl (meth)acrylate, cyclododecyl (meth)acrylate, and tricyclodecanyl (meth)acrylate; isobornyl-containing polymerizable unsaturated compounds, such as isobornyl (meth)acrylate; adamantyl-containing polymerizable unsaturated compounds, such as adamantyl (meth)acrylate; aromatic-ring-containing polymerizable unsaturated monomers, such as benzyl (meth)acrylate, styrene, α-methylstyrene, and vinyltoluene; carboxy-containing polymerizable unsaturated monomers, such as (meth)acrylic acid, maleic acid, crotonic acid, and β-carboxyethyl acrylate; nitrogen-containing polymerizable unsaturated monomers having no urethane bond, such as (meth)acrylonitrile, (meth)acrylamide, N,N-dimethylaminoethyl (meth)acrylate, N,N-diethylaminoethyl (meth)acrylate, N,N-dimethylaminopropyl (meth)acrylamide, and addition products of glycidyl (meth)acrylate with amines; urethane bond-containing polymerizable unsaturated monomers, such as a reaction product of an isocyanate-containing polymerizable unsaturated monomer and a hydroxy-containing compound, and a reaction product of a hydroxy-containing polymerizable unsaturated monomer and an isocyanate-containing compound; epoxy-containing polymerizable unsaturated monomers, such as glycidyl (meth)acrylate, β-methylglycidyl (meth)acrylate, 3,4-epoxycyclohexylmethyl (meth)acrylate, 3,4-epoxycyclohexylethyl (meth)acrylate, 3,4-epoxycyclohexylpropyl (meth)acrylate, and allyl glycidyl ether; (meth)acrylates having alkoxy-terminated polyoxyethylene chains; sulfonic acid group-containing polymerizable unsaturated monomers, such as 2-acrylamido-2-methylpropane-sulfonic acid, 2-sulfoethyl (meth)acrylate, allylsulfonic acid, and 4-styrenesulfonic acid, and sodium salts and ammonium salts of these sulfonic acids; phosphoric acid group-containing polymerizable unsaturated monomers, such as 2-acryloyloxyethyl acid phosphate, 2-methacryloyloxyethyl acid phosphate, 2-acryloyloxypropyl acid phosphate, and 2-methacryloyloxypropyl acid phosphate; perfluoroalkyl (meth)acrylates, such as perfluorobutylethyl (meth)acrylate, and perfluorooctylethyl (meth)acrylate; fluorinated alkyl-containing polymerizable unsaturated monomers, such as fluoroolefins; polymerizable unsaturated monomers having a photo-polymerizable functional group, such as maleimide; (meth)acrylates having alkoxy-terminated polyoxyethylene chains; polymerizable unsaturated monomers having two or more polymerizable unsaturated groups per molecule, such as allyl (meth)acrylate, ethylene glycol di(meth)acrylate, triethylene glycol di(meth)acrylate, tetraethylene glycol di(meth)acrylate, 1,3-butylene glycol di(meth)acrylate, trimethylol propane tri(meth)acrylate, 1,4-butanediol di(meth)acrylate, neopentyl glycol di(meth)acrylate, 1,6-hexanediol di(meth)acrylate, pentaerythritol di(meth)acrylate, pentaerythritol tetra(meth)acrylate, glycerol di(meth)acrylate, 1,1,1-tris-hydroxymethylethane di(meth)acrylate, 1,1,1-trishydroxymethylethane tri(meth)acrylate, 1,1,1-trishydroxymethylpropane tri(meth)acrylate, triallyl isocyanurate, diallyl terephthalate, and divinylbenzene; and the like. These may be used alone, or in a combination of two or more.

The acrylic resin may be produced by known polymerization methods. For example, the resin may be produced by solution polymerization of polymerizable unsaturated monomers in an organic solvent. However, the methods are not limited to this. For example, bulk polymerization, emulsion polymerization, suspension polymerization, or the like is also applicable. In solution polymerization, either continuous polymerization or batch polymerization may be performed, the polymerizable unsaturated monomers may be added all at once or in divided portions, and the addition may be performed successively or intermittently.

The polymerization initiator used for polymerization is not particularly limited, and known polymerization initiators can be used. Examples include peroxide-based polymerization initiators, such as cyclohexanone peroxide, 3,3,5-trimethylcyclohexanone peroxide, methylcyclohexanone peroxide, 1,1-bis(tert-butylperoxy)-3,3,5-trimethylcyclohexane, 1,1-bis(tert-butylperoxy)cyclohexane, n-butyl-4,4-bis(tert-butylperoxy) valerate, cumenehydroperoxide, 2,5-dimethylhexane-2,5-dihydroperoxide, 1,3-bis(tert-butylperoxy-m-isopropyi)benzene, 2,5-dimethyl-2,5-di(tert-butylperoxy)hexane, diisopropylbenzene peroxide, tert-butylcumyl peroxide, decanoyl peroxide, lauroyl peroxide, benzoyl peroxide, 2,4-dichlorobenzoyl peroxide, di-tert-amyl peroxide, bis(tert-butylcyclohexyl)peroxydicarbonate, tert-butylperoxy benzoate, 2,5-dimethyl-2,5-di(benzoylperoxy)hexane, and tert-butyl peroxy-2-ethylhexanoate; and azo-based polymerization initiators, such as 2,2'-azobis(isobutyronitrile), 1,1-azobis(cyclohexane-1-carbonitrile), azocumene, 2,2'-azobis(2-methylbutyronitrile), 2,2'-azobisdimethylvaleronitrile, 4,4'-azobis(4-cyanovaleric acid), 2-(t-butylazo)-2-cyanopropane, 2,2'-azobis(2,4,4-trimethylpentane), 2,2'-azobis(2-methylpropane), and dimethyl 2,2'-azobis(2-methylpropionate). These may be used alone, or in a combination of two or more.

The solvents used in the above polymerization or dilution are not particularly limited. Examples include water, organic solvents, mixtures thereof, and the like. Examples of organic solvents include hydrocarbon solvents, such as n-butane, n-hexane, n-heptane, n-octane, cyclopentane, cyclohexane, and cyclobutane; aromatic-based solvents, such as toluene and xylene; ketone-based solvents, such as methyl isobutyl ketone; ether-based solvents, such as n-butyl ether, dioxane, ethylene glycol monomethyl ether, ethylene glycol monoethyl ether, ethylene glycol monobutyl ether, and diethylene glycol; ester-based solvents, such as ethyl acetate, n-butyl acetate, isobutyl acetate, ethylene glycol monomethyl ether acetate, and butylcarbitol acetate; ketone-based solvents, such as methyl ethyl ketone, methyl isobutyl ketone, and diisobutyl ketone; alcohol-based solvents, such as ethanol, isopropanol, n-butanol, sec-butanol, and isobutanol; amide-based solvents, such as Equamide (trade name, produced by Idemitsu Kosan Co., Ltd.), N,N-dimethylformamide, N,N-dimethylacetamide, N-methylformamide, N-methylacetamide, N-methylpropionamide, N-methyl-2-pyrrolidone; and other known solvents. These may be used alone, or in a combination of two or more.

Examples of usable methods for solution polymerization in an organic solvent include a method comprising mixing a polymerization initiator, polymerizable unsaturated monomer components, and an organic solvent, and performing heating while stirring; and a method comprising introducing an organic solvent in a reaction vessel to prevent

an increase in the temperature of the system due to the reaction heat, and adding polymerizable unsaturated monomer components and a polymerization initiator dropwise separately or in combination over a predetermined time with stirring at a temperature of 60 to 200°C while optionally blowing an inert gas, such as nitrogen or argon.

In general, polymerization may be performed for about 1 to 10 hours. After the polymerization of each step, an additional catalyst step may be optionally performed that comprises heating the reaction vessel while adding a polymerization initiator dropwise.

The hydroxy-containing acrylic resin has a weight average molecular weight of preferably 1000 to 100000, and more preferably 3000 to 50000.

In the present specification, the number average molecular weight and weight average molecular weight refer to values determined by converting the retention time (retention volume) measured with gel permeation chromatography (GPC) into a molecular weight of a polystyrene based on the retention time (retention volume) of a polystyrene standard with a known molecular weight measured under the same conditions. More specifically, the measurement is performed using an HLC8120GPC gel permeation chromatography apparatus (trade name, produced by Tosoh Corporation) together with four columns (TSKgel G-4000HXL, TSKgel G-3000HXL, TSKgel G-2500HXL, and TSKgel G-2000XL; trade names, all produced by Tosoh Corporation) under the following conditions: mobile phase, tetrahydrofuran; measurement temperature, 40°C; flow rate, 1 mL/min; and detector, RI.

Hydroxy-containing Polyester Resin (XA-1-2)

The hydroxy-containing polyester resin (XA-1-2) can usually be produced by an esterification or transesterification reaction of an acid component with an alcohol component.

The acid component may be a compound that is usually used as an acid component for producing a polyester resin. Examples of such acid components include aliphatic polybasic acids, alicyclic polybasic acids, aromatic polybasic acids, and the like.

Generally, the aliphatic polybasic acids include aliphatic compounds having at least two carboxy groups per molecule; acid anhydrides of such aliphatic compounds; and esters of such aliphatic compounds. Examples of aliphatic polybasic acids include succinic acid, glutaric acid, adipic acid, pimelic acid, suberic acid, azelaic acid, sebacic acid, undecanedioic acid, dodecanedioic acid, brassylic acid, octadecanedioic acid, citric acid, butane tetracarboxylic acid, and like aliphatic polycarboxylic acids; anhydrides of such aliphatic polycarboxylic acids; esters of such aliphatic polycarboxylic acids with lower alkyls having about 1 to 4 carbon atoms; and the like. These aliphatic polybasic acids may be used alone, or in a combination of two or more.

Generally, the alicyclic polybasic acids include compounds having at least one alicyclic structure and at least two carboxy groups per molecule, acid anhydrides of such compounds, and esters of such compounds. The alicyclic structure is mostly a 4- to 6-membered ring structure. Examples of alicyclic polybasic acids include 1,2-cyclohexanedicarboxylic acid, 1,3-cyclohexanedicarboxylic acid, 1,4-cyclohexanedicarboxylic acid, 4-cyclohexene-1,2-dicarboxylic acid, 3-methyl-1,2-cyclohexanedicarboxylic acid, 4-methyl-1,2-cyclohexanedicarboxylic acid, 1,2,4-cyclohexanetricarboxylic acid, 1,3,5-cyclohexanetricarboxylic acid, and like alicyclic polycarboxylic acids; anhydrides of such alicyclic polycarboxylic acids; and esters of such alicyclic polycarboxylic acids with lower alkyls having about 1 to 4 carbon atoms. These alicyclic polybasic acids may be used alone, or in a combination of two or more.

Generally, the aromatic polybasic acids include aromatic compounds having at least two carboxy groups per molecule; acid anhydrides of such aromatic compounds; and esters of such aromatic compounds. Examples of aromatic polybasic acids include phthalic acid, isophthalic acid, terephthalic acid, naphthalenedicarboxylic acid, 4,4'-biphenyldicarboxylic acid, trimellitic acid, pyromellitic acid, and like aromatic polycarboxylic acids; anhydrides of such aromatic polycarboxylic acids; and esters of such aromatic polycarboxylic acids with lower alkyls having about 1 to 4 carbon atoms. Such aromatic polybasic acids may be used alone or in a combination of two or more.

Acid components other than the aliphatic polybasic acids, alicyclic polybasic acids, and aromatic polybasic acids mentioned above can also be used. Examples of the acid components include, but are not particularly limited to, coconut oil fatty acid, cottonseed oil fatty acid, hempseed oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, safflower oil fatty acid, and like fatty acids; lauric acid, myristic acid, palmitic acid, stearic acid, oleic acid, linolic acid, linolenic acid, benzoic acid, *p-tert*-butyl benzoic acid, cyclohexanoic acid, 10-phenyloctadecanoic acid, and like monocarboxylic acids; and lactic acid, 3-hydroxybutanoic acid, 3-hydroxy-4-ethoxybenzoic acid, and like hydroxycarboxylic acids. These acid components may be used alone, or in a combination of two or more.

Polyhydric alcohols having at least two hydroxy groups per molecule can be preferably used as the alcohol component mentioned above. Examples of the polyhydric alcohols include ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 2-methyl-1,3-propanediol, 3-methyl-1,2-butanediol, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol,

3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecanedimethanol, hydroxypivalic acid neopentyl glycol ester, hydrogenated bisphenol A, hydrogenated bisphenol F, dimethylolpropionic acid, and like dihydric alcohols; polylactone diols obtained by adding lactone compounds, such as ε-caprolactone, to such dihydric alcohols; bis(hydroxyethyl) terephthalate and like ester diol compounds; alkylene oxide adducts of bisphenol A, polyethylene glycol, polypropylene glycol, polybutylene glycol, and like polyether diol compounds; glycerin, trimethylolethane, trimethylolpropane, diglycerin, triglycerin, 1,2,6-hexanetriol, pentaerythritol, dipentaerythritol, tris(2-hydroxyethyl)isocyanuric acid, sorbitol, mannitol, and like trihydric or higher alcohols; polylactone polyol compounds obtained by adding lactone compounds, such as ε-caprolactone, to such trihydric or higher alcohols; fatty acid esters of glycerin; and the like.

Alcohol components other than the polyhydric alcohols mentioned above can also be used. Examples of the alcohol components include, but are not particularly limited to, methanol, ethanol, propyl alcohol, butyl alcohol, stearyl alcohol, 2-phenoxyethanol, and like monohydric alcohols; and alcohol compounds obtained by reacting, with acids, propylene oxide, butylene oxide, Cardura E10 (trade name, produced by Hexion Specialty Chemicals; glycidyl ester of a synthetic highly branched saturated fatty acid), and like monoepoxy compounds.

The production method for the hydroxy-containing polyester resin is not particularly limited, and may be performed by any known method. For example, the acid component and the alcohol component are heated in a nitrogen stream at about 150 to 250°C for about 5 to 10 hours to carry out an esterification or transesterification reaction of the acid component with the alcohol component. The hydroxy-containing polyester resin can thereby be produced.

For the esterification or transesterification reaction of the acid component with the alcohol component, these components may be added to a reaction vessel at one time, or one or both of the components may be added in several portions. Further, a hydroxy-containing polyester resin may be first synthesized and then reacted with an acid anhydride for half-esterification to thereby obtain a carboxy- and hydroxy-containing polyester resin. Furthermore, a carboxy-containing polyester resin may be first synthesized, and the alcohol component may be then added to obtain a hydroxy-containing polyester resin.

For promoting the esterification or transesterification reaction, known catalysts are usable. Examples of known catalysts include dibutyltin oxide, antimony trioxide, zinc acetate, manganese acetate, cobalt acetate, calcium acetate, lead acetate, tetrabutyl titanate, tetraisopropyl titanate, and the like.

The hydroxy-containing polyester resin may be modified with a fatty acid, a monoepoxy compound, a polyisocyanate compound, or the like during or after the preparation of the resin.

As the solvent used for the polymerization or dilution, the solvents mentioned above in the "Hydroxy-containing Acrylic Resin (XA-1-1)" section can be preferably used.

The hydroxy-containing polyester resin preferably has a hydroxy value of about 1 to 200 mgKOH/g, more preferably about 2 to 180 mgKOH/g, and still more preferably about 5 to 170 mgKOH/g. When the hydroxy-containing polyester resin further contains a carboxy group, its acid value is preferably about 5 to 150 mgKOH/g, more preferably about 10 to 100 mgKOH/g, and still more preferably about 15 to 80 mgKOH/g. The number average molecular weight of the hydroxy-containing polyester resin is preferably about 500 to 50000, more preferably about 1000 to 30000, and even more preferably about 1200 to 10000.

The hydroxy-containing polyester resin can be neutralized with a basic compound, if necessary. Examples of the basic compound include hydroxides of alkali metals or alkaline earth metals, such as sodium hydroxide, potassium hydroxide, lithium hydroxide, calcium hydroxide, and barium hydroxide; ammonia; primary monoamines such as ethylamine, propylamine, butylamine, benzylamine, monoethanolamine, 2,2-dimethyl-3-amino-1-propanol, 2-aminopropanol, 2-amino-2-methyl-1-propanol, and 3-aminopropanol; secondary monoamines, such as diethylamine, diethanolamine, di-n-propanolamine, diisopropanolamine, N-methylethanolamine, and N-ethylethanolamine; tertiary monoamines, such as dimethylethanolamine, trimethylamine, triethylamine, triisopropylamine, methyldiethanolamine, and 2-(dimethylamino)ethanol; polyamines such as diethylenetriamine, hydroxyethylaminoethylamine, ethylaminoethylamine, and methylaminopropylamine; and the like. These may be used alone, or in a combination of two or more.

Curing Agent (XA-2)

The curing agent (XA-2) is a compound capable of curing the paint (X) by reacting with hydroxy groups or functional groups, such as carboxy or epoxy, in the hydroxy-containing resin (XA-1). Examples of the curing agent include amino resins, polyisocyanate compounds, blocked polyisocyanate compounds, epoxy-containing compounds, carboxy-containing compounds, carbodiimide-containing compounds, and the like. Of these, the curing agent is preferably at least one member selected from the group consisting of a melamine resin, a polyisocyanate compound, and a blocked polyisocyanate compound reactable with hydroxy. The curing agent may be used alone, or in a combination of two or more.

Examples of the amino resins include partially or fully methylolated amino resins obtained by reacting amino components with aldehyde components. Examples of the amino components include melamine, urea, benzoguanamine, acetoguanamine, steroguanamine, spiroguanamine, dicyandiamide, and the like. Examples of the aldehyde components

include formaldehyde, paraformaldehyde, acetaldehyde, benzaldehyde, and the like. The methylolated amino resins in which some or all of the methylol groups have been etherified with suitable alcohols are also usable. Examples of alcohols that can be used for the etherification include methyl alcohol, ethyl alcohol, n-propyl alcohol, i-propyl alcohol, n-butyl alcohol, i-butyl alcohol, 2-ethylbutanol, 2-ethylhexanol, and the like.

The amino resin is preferably a melamine resin. In particular, a methyl-etherified melamine resin obtained by etherifying some or all of the methylol groups of a partially or fully methylolated melamine resin with methyl alcohol; a butyl-etherified melamine resin obtained by etherifying some or all of the methylol groups of a partially or fully methylolated melamine resin with butyl alcohol; and a methyl-butyl mixed etherified melamine resin obtained by etherifying some or all of the methylol groups of a partially or fully methylolated melamine resin with methyl alcohol and butyl alcohol are preferable. A methyl-butyl mixed etherified melamine resin is more preferable.

The polyisocyanate compound is a compound having at least two isocyanate groups per molecule. Examples include aliphatic polyisocyanates, alicyclic polyisocyanates, aromatic-aliphatic polyisocyanates, aromatic polyisocyanates, derivatives of such polyisocyanates, and the like.

Examples of the aliphatic polyisocyanates include aliphatic diisocyanates, such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate, and methyl 2,6-diisocyanatohexanoate (common name: lysine diisocyanate); aliphatic triisocyanates such as 2-isocyanatoethyl 2,6-diisocyanatohexanoate, 1,6-diisocyanato-3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane; and the like.

Examples of the alicyclic polyisocyanates include alicyclic diisocyanates, such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), 4-methyl-1,3-cyclohexylene diisocyanate (common name: hydrogenated TDI), 2-methyl-1,3-cyclohexylene diisocyanate, 1,3- or 1,4-bis(isocyanatomethyl)cyclohexane (common name: hydrogenated xylylene diisocyanate) or mixtures thereof, methylenebis(4,1-cyclohexanediyl)diisocyanate (common name: hydrogenated MDI), and norbornane diisocyanate; alicyclic triisocyanates, such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1) heptane, 5-(2-isocyanatoethyl)-2-isocyanatomethy-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)heptane, and 6-(2-isocyanatoethyl)-2-isocyanatomethyl-2-(3-isocyanatopropyl)-bicyclo(2.2.1)heptane; and the like.

Examples of the aromatic-aliphatic polyisocyanates include aromatic-aliphatic diisocyanates, such as methylenebis(4,1-phenylene)diisocyanate (common name: MDI), 1,3- or 1,4-xylylene diisocyanate or mixtures thereof, ω,ω'-diisocyanato-1,4-diethylbenzene, and 1,3- or 1,4-bis(1-isocyanato-1-methylethyl)benzene (common name: tetramethylxylylene diisocyanate) or mixtures thereof; aromatic-aliphatic triisocyanates, such as 1,3,5-triisocyanatomethylbenzene; and the like.

Examples of the aromatic polyisocyanates include aromatic diisocyanates, such as m-phenylene diisocyanate, p-phenylene diisocyanate, 4,4'-diphenyl diisocyanate, 1,5-naphthalene diisocyanate, 2,4-tolylene diisocyanate (common name: 2,4-TDI), or 2,6-tolylene diisocyanate (common name: 2,6-TDI) or mixtures thereof, 4,4'-toluidine diisocyanate, and 4,4'-diphenylether diisocyanate; aromatic triisocyanates, such as triphenylmethane-4,4',4"-triisocyanate, 1,3,5-triisocyanatobenzene, and 2,4,6-triisocyanatotoluene; aromatic tetraisocyanates, such as 4,4'-diphenylmethane-2,2',5,5'-tetraisocyanate; and the like.

Examples of the polyisocyanate derivatives include dimers, trimers, biurets, allophanates, urethodiones, urethoimines, isocyanurates, oxadiazinetriones, polymethylene polyphenyl polyisocyanates (crude MDI, polymeric MDI), crude TDI, and the like, of the polyisocyanates mentioned above. The above polyisocyanates and derivatives thereof may be used alone, or in a combination of two or more.

The polyisocyanate compound may be a blocked polyisocyanate compound in which the isocyanate groups of a polyisocyanate compound mentioned above are blocked. Preferable examples of blocking agents include phenol compounds; lactam compounds; alcohol compounds; oxime compounds; mercaptan compounds; dimethyl malonate; active methylene compounds, such as diethyl malonate; and the like. Blocking can be easily performed by mixing an unblocked polyisocyanate compound with a blocking agent. These polyisocyanate compounds may be used alone, or in a combination of two or more. It is also possible to use an unblocked polyisocyanate compound and a blocked polyisocyanate compound in combination.

The amount of the curing agent (XA-2) is usually 0 to 60 mass%, and preferably 20 to 40 mass% based on the solids content of the binder (XA).

Catalyst (C) that Promotes Hydrolysis Condensation of Alkoxysilyl

The paint (X) may optionally contain a catalyst (C) that promotes hydrolysis condensation of alkoxysilyl. The catalyst (C) that promotes hydrolysis condensation of alkoxysilyl serves as a curing catalyst that promotes hydrolysis condensation of hydrolyzable alkoxysilyl contained in the alkoxysilyl-containing organopolysiloxane (YB) contained in the paint (Y) for applying to the coating film (X*) to form an upper layer, and hydrolyzable alkoxysilyl contained in the silyl-containing acrylic resin (YA-1-3) optionally contained in the paint (Y).

When the paint (Y) contains the catalyst (C) that promotes hydrolysis condensation of alkoxysilyl, it is preferable that the paint (X) does not contain the catalyst (C) from the viewpoint of storability. However, the presence of the catalyst (C) can improve the curability of the alkoxysilyl-containing organopolysiloxane (YB); therefore, the paint (X) can contain the catalyst (C) to an extent that does not decrease storability.

The catalyst (C) that promotes hydrolysis condensation of alkoxysilyl may be a known catalyst for hydrolysis condensation without particular limitation. Specific examples include organic tin compounds, organic aluminum compounds, organic titanium compounds, organic zirconium compounds, organic zinc compounds, organic cobalt compounds, boric acid compounds, sulfonic acid compounds, sulfonic acid salt compounds, aminosilane compounds, quaternary ammonium salt compounds, tertiary amine compounds, phosphate compounds, phosphite compounds, and the like.

Examples of organic tin compounds include diacetyltin diacetate, dibutyltin dilaurate, dibutyltin diacetate, dioctyltin dilaurate, diacetyltin dioctoate, tin octylate, dibutyltin diacetate, dibutyltin dioctoate, and the like.

Examples of organic aluminum compounds include aluminum trimethoxide, aluminum tris(acetylacetonate), aluminum tri-n-butoxide, aluminum tris(ethylacetoacetate), aluminum diisopropoxy(ethyl acetoacetate), aluminum acetylacetonate, and the like.

Examples of organic titanium compounds include titanium tetra(monoethyl ethoxide), titanium tetra(monoethyl ethoxide), titanium tetra(monobutyl ethoxide), titanium tetrakis(acetylacetonate), tetranormal butyl titanate, and the like.

Examples of organic zirconium compounds include zirconium tetra(monomethyl ethoxide), zirconium tetra(monoethyl ethoxide), zirconium tetra(monobutyl ethoxide), zirconium normal propylate, zirconium normal butyrate, zirconium tetrakis(acetylacetonate), and the like.

Examples of organic zinc compounds include zinc naphthenate and the like.

Examples of organic cobalt compounds include cobalt octylate, cobalt naphthenate, and the like.

Examples of boric acid compounds include trimethyl borate, triethyl borate, tripropyl borate, tributyl borate, triphenyl borate, tri(4-chlorophenyl) borate, trihexafluoroisopropyl borate, and the like.

Examples of sulfonic acid compounds include methanesulfonic acid, benzenesulfonic acid, p-toluene sulfonic acid, sulfuric acid, and the like. Examples of sulfonic acid salt compounds include pyridinium p-toluene sulfonate and the like.

Examples of aminosilane compounds include γ-aminopropyltrimethoxysilane, γ-aminopropyltriethoxysilane, and the like.

Examples of quaternary ammonium salt compounds include tetramethyl ammonium chloride, benzalkonium chloride, and the like.

Examples of tertiary amine compounds include compounds containing a plurality of nitrogen atoms, such as guanidine and amidine, and the like.

Examples of phosphate compounds include trimethyl phosphate, triethyl phosphate, tripropyl phosphate, tributyl phosphate, trihexyl phosphate, tris(2-ethylhexyl) phosphate, trioctyl phosphate, trinonyl phosphate, tridecyl phosphate, trilauryl phosphate, trimyristyl phosphate, tricetyl phosphate, tristearyl phosphate, trioleyl phosphate, tribehenyl phosphate, monomethyl phosphate, dimethyl phosphate, monoethyl phosphate, diethyl phosphate, monopropyl phosphate, dipropyl phosphate, monoisopropyl phosphate, diisopropyl phosphate, monobutyl phosphate, dibutyl phosphate, monopentyl phosphate, dipentyl phosphate, monohexyl phosphate, dihexyl phosphate, monooctyl phosphate, dioctyl phosphate, mono 2-ethylhexyl phosphate, di 2-ethylhexyl phosphate, monodecyl phosphate, didecyl phosphate, monoisodecyl phosphate, diisodecyl phosphate, monoundecyl phosphate, diundecyl phosphate, monododecyl phosphate, didodecyl phosphate, monotetradecyl phosphate, ditetradecyl phosphate, monohexadecyl phosphate, dihexadecyl phosphate, monooctadecyl phosphate, dioctadecyl phosphate, monophenyl phosphate, diphenyl phosphate, monobenzyl phosphate, dibenzyl phosphate, and the like.

Examples of phosphite compounds include triphenyl phosphite, diphenyl phosphite, tri-o-tolyl phosphite, di-o-tolyl phosphite, tri-m-tolyl phosphite, di-m-tolyl phosphite, tri-p-tolyl phosphite, di-p-tolyl phosphite, di-o-chlorophenyl phosphite, tri-p-chlorophenyl phosphite, di-p-chlorophenyl phosphite, and the like.

These catalysts (C) may be used alone, or in a combination of two or more. In particular, the catalyst (C) preferably contains at least one phosphate compound from the viewpoint of curability.

The catalyst (C) preferably has a number average molecular weight of 2000 or less, more preferably 1800 or less, and still more preferably 1500 or less, in order to migrate to the upper coating film (Y*) and function as a curing catalyst.

The catalyst (C) preferably contains at least one phosphate compound, and the number average molecular weight of the phosphate compound is preferably 2000 or less, in order for the catalyst (C) to migrate to the upper coating film (Y*) and function as a curing catalyst.

The catalyst (C) is incorporated in an amount of 0.01 to 10 mass%, preferably 0.1 to 8 mass%, and more preferably 0.2 to 6 mass% based on the binder solids content mass of the binder (XA) .

Other Components of Paint (X)

Examples of other components of the paint (X) include pigments, additives, solvents, and the like. These components are incorporated, if necessary.

Examples of the pigments include color pigments, extender pigments, effect pigments, and the like. These pigments may be used alone, or in a combination of two or more.

Examples of the color pigments include titanium oxide, zinc oxide, carbon black, molybdenum red, Prussian blue, cobalt blue, azo pigments, phthalocyanine pigments, quinacridone pigments, isoindoline pigments, threne pigments, perylene pigments, dioxazine pigments, diketopyrrolopyrrole pigments, and the like. Of these, titanium oxide can be preferably used from the viewpoint of impact resistance, in particular, impact resistance and the like at low temperatures, of the formed coating film.

Examples of the extender pigments include clay, kaolin, barium sulfate, barium carbonate, calcium carbonate, talc, silica, alumina white, and the like. Of these, clay, calcium carbonate, and talc can be preferably used from the viewpoint of impact resistance, in particular, impact resistance and the like at low temperatures, of the formed coating film.

Examples of the effect pigments include aluminum (including vapor-deposition aluminum), copper, zinc, brass, nickel, glass flakes, aluminum oxide, mica, titanium oxide- and/or iron oxide-coated aluminum oxide, titanium oxide- and/or iron oxide-coated mica, and the like. Examples of aluminum pigments include non-leafing type aluminum pigments and leafing type aluminum pigments. Any of these pigments can be used.

These pigments may be added directly to the paint composition, or may be first mixed with and dispersed in a pigment dispersant or pigment dispersion resin to form a paste, and then added to the paint. The pigment dispersant, the pigment dispersion resin, and the dispersion method may be a known pigment dispersant, a known pigment dispersion resin, and a known dispersion method.

Examples of the additives include known additives for paints, such as ultraviolet absorber (e.g., benzotriazole absorbers, triazine absorbers, salicylic acid derivative absorbers, benzophenone absorbers), light stabilizers (e.g., hindered amine light stabilizers), thickeners (e.g., non-aqueous dispersion acrylic thickeners, polymer fine particle thickeners, urethane associative thickeners, urea thickeners, mineral thickeners), defoaming agents, surface adjusting agents, antisettling agents, rust preventive agents, chelating agents (e.g., acetylacetone), dehydrating agents, neutralizing agents, plasticizers, and the like.

As the solvent, the solvents mentioned above in the "Hydroxy-containing Acrylic Resin (XA-1-1)" can be preferably used.

The form of the paint (X) is not particularly limited and may be any form of an aqueous paint, organic-solvent-based paint, or solventless paint. The term "aqueous paint" as used herein is used in contrast to "organic-solvent-based paint." In general, this term refers to a paint in which a coating film-forming resin, a pigment, and the like are dispersed and/or dissolved in water, or in a medium mainly consisting of water (aqueous medium).

Paint (Y)

The paint (Y) that can be used in the coating method of the present invention contains a binder (YA) and an alkoxysilyl-containing organopolysiloxane (YB).

Binder (YA)

The binder (YA) preferably contains a hydroxy-containing resin (YA-1) and a curing agent (YA-2). As the hydroxy-containing resin (YA-1), the resins mentioned above in the "Hydroxy-containing Resin (XA-1)" section can be preferably used. As the curing agent (YA-2), the curing agents mentioned above in the "Curing Agent (XA-2)" section can be preferably used.

Hydroxy-containing Resin (YA-1)

As the hydroxy-containing resin (YA-1), it is preferable to contain at least one silyl-containing acrylic resin (YA-1-3) from the viewpoint of imparting stain resistance to the resulting multilayer coating film for a long period of time.

The silyl-containing acrylic resin (YA-1-3) can be produced in the same manner as the resins mentioned above

in the "Hydroxy-containing Acrylic Resin (XA-1-1)" section. Silyl groups can be introduced into the acrylic resin by using a hydrolyzable silyl-containing polymerizable unsaturated monomer (a1) as a starting polymerizable unsaturated monomer material for copolymerization.

The hydrolyzable silyl-containing polymerizable unsaturated monomer (a1) is a monomer component for reacting with alkoxysilyl of the alkoxysilyl-containing organopolysiloxane (YB) to impart long-term stain resistance (prevention of stain adhesion or removal of stains). The hydrolyzable silyl-containing polymerizable unsaturated monomer (a1) includes a compound containing a polymerizable double bond and a hydrolyzable silyl group per molecule. Specific examples include vinyl tri(C1-C6 alkoxy)silane, such as vinyltrimethoxysilane, vinyltriethoxysilane, and vinyltris(2-methoxyethoxy)silane; vinyl tri(C2-C6 alkanoyloxy)silane, such as vinyltriacetoxysilane; (meth)acryloyloxyalkyltri-C1-C6 alkoxysilane, such as β-(meth)acryloyloxyethyltrimethoxysilane, γ-(meth)acryloyloxypropyltrimethoxysilane, and γ-(meth)acryloyloxypropyltriethoxysilane; and the like. These may be used alone, or in a combination of two or more.

The silyl-containing acrylic resin (YA-1-3) preferably contains the hydrolyzable silyl-containing polymerizable unsaturated monomer (a1) in an amount of 1 to 60 mass%, and more preferably 10 to 40 mass%.

In addition to the hydrolyzable silyl-containing polymerizable unsaturated monomer (a1), the silyl-containing acrylic resin (YA-1-3) may further contain a siloxane macromonomer (a2).

The siloxane macromonomer (a2) is a monomer component for introducing polysiloxane chains into the acrylic resin and imparting water repellency to the surface of the resulting coating film. Specific examples include compounds represented by the following formulas (1) and (2).

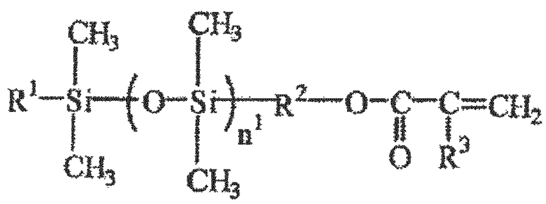

(1)

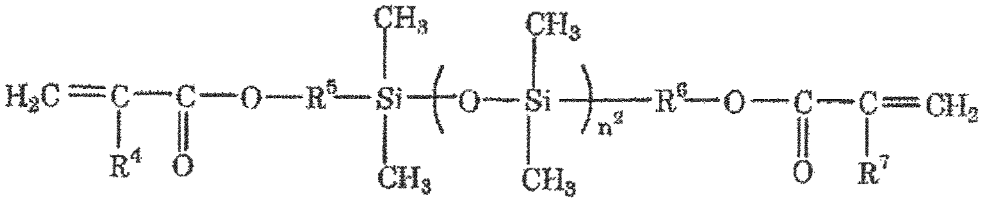

(2)

(In the formula,

$R^1$ represents an alkyl group containing 1 to 10 carbon atoms,
$R^2$ represents a divalent hydrocarbon group containing 1 to 6 carbon atoms,
$R^3$ represents a hydrogen atom or a methyl group,
$R^4$ and $R^7$ are identical or different, and each represents a hydrogen atom or a methyl group,
$R^5$ and $R^6$ are identical or different, and each represents a divalent hydrocarbon group containing 1 to 6 carbon atoms, and $n^1$ and $n^2$ each indicate the number of repeating dimethyl siloxane units, and are each 6 to 300, and preferably 6 to 100.)

The siloxane macromonomer (a2) usually can have a number average molecular weight of 300 to 30000, and preferably 500 to 20000.

As the amount of the silyl-containing acrylic resin (YA-1-3) in the paint (Y), the solids content of the silyl-containing acrylic resin (YA-1-3) is preferably 0 to 40 mass%, more preferably 1 to 35 mass%, and still more preferably 5 to 30 mass% based on the binder solids content of the binder (YA).

Curing Agent (YA-2)

The curing agent (YA-2) is a compound capable of curing the paint (Y) by reacting with hydroxy groups or functional groups, such as carboxy or epoxy, in the hydroxy-containing resin (YA-1). Examples of the curing agent include amino resins, polyisocyanate compounds, blocked polyisocyanate compounds, epoxy-containing compounds, carboxy-containing compounds, carbodiimide-containing compounds, and the like. Of these, the curing agent is preferably at least one member selected from the group consisting of a melamine resin, a polyisocyanate compound, and a blocked

polyisocyanate compound reactable with hydroxy. The curing agent may be used alone, or in a combination of two or more.

Alkoxysilyl-containing Organopolysiloxane (YB)

The alkoxysilyl-containing organopolysiloxane (YB) contains organopolysiloxane containing hydrolyzable alkoxysilyl at a terminal or in a side chain of the molecule. The hydrolyzable alkoxysilyl in the molecule is hydrolyzed when in contact with moisture, water, and the like in the air and form silanol groups. These silanol groups undergo a reaction with each other or with other functional groups in the binder (YA) to increase the molecular weight, thus imparting stain resistance and durability to the multilayer coating film formed by using the coating method of the present invention.

The alkoxysilyl-containing organopolysiloxane (YB) of the present invention preferably contains hydrocarbon, such as methyl or phenyl from the viewpoint of imparting water repellency to the coating film.

Examples of usable commercially available products of alkoxysilyl-containing organopolysiloxane (YB) include SR2406, SR2410, SR2420, SR2416, SR2402, and AY42-161 (all produced by Toray Dow Corning Silicone Co., Ltd.); FZ-3704 and FZ-3511 (both produced by Nippon Unicar Company Limited); KC-89S, KR-500, X-40-9225, X-40-9246, X-40-9250, KR-217, KR-9218, KR-213, KR-510, X-40-9227, X-40-9247, X-41-1053, X-41-1056, X-41-1805, X-41-1810, X-40-2651, X-40-2308, X-40-9238, X-40-2239, X-40-2327, KR-400, X-40-175, and X-40-9740 (all produced by Shin-Etsu Chemical Co., Ltd.); and the like.

The number average molecular weight of the alkoxysilyl-containing organopolysiloxane (YB) is preferably 500 to 2000 from the viewpoint of compatibility with paints.

An extremely small amount of the alkoxysilyl-containing organopolysiloxane (YB) in the paint (Y) cannot achieve stain resistance (prevention of stain adhesion or removal of stains), while an excessive amount causes deterioration of tackiness of the coating surface. Therefore, the solids content of the alkoxysilyl-containing organopolysiloxane (YB) is 0.01 to 20 mass%, preferably 0.1 to 10 mass%, and more preferably 0.2 to 8 mass% based on the binder solids content of the binder (YA).

Catalyst (C) that Promotes Hydrolysis Condensation of Alkoxysilyl

The paint (Y) may optionally contain the catalyst (C) that promotes hydrolysis condensation of alkoxysilyl. When the paint (X) contains the catalyst (C) that promotes hydrolysis condensation of alkoxysilyl, it is preferable that the paint (Y) does not contain the catalyst (C) from the viewpoint of storability. However, the presence of the catalyst (C) can improve the curability of the alkoxysilyl-containing organopolysiloxane (YB); therefore, the paint (Y) can contain the catalyst (C) to an extent that does not decrease storability. The specific amount of the catalyst (C) in the paint (Y) is 0.01 to 10 mass%, and preferably 0.1 to 7 mass% based on the solids content of the binder (YA).

Other Components of Paint (Y)

Examples of other components of the paint (Y) include pigments, additives, solvents, and the like. These components are incorporated, if necessary.

As the pigment, the pigments mentioned above in the "Other Components of Paint (X)" section can be preferably used. However, it is preferable that the paint (Y) be a clear paint that substantially does not contain a color pigment.

As the additives, the additives mentioned above in the "Other Components of Paint (X)" section can be preferably used.

From the viewpoint of suppressing hydrolysis, it is preferable that the paint (Y) contains a dehydrating agent. The dehydrating agent may be known dehydrating agents. Specific examples include metal alkoxides, such as aluminum isopropylate, aluminum sec-butyrate, tetraisopropyl titanate, tetranormal butyl titanate, zirconium normal butyrate, ethyl silicate, and vinyltrimethoxysilane; organic alkoxy compounds, such as methyl orthoformate, ethyl orthoformate, methyl orthoacetate, ethyl orthoacetate, isopropyl orthoacetate, and dimethoxypropane; monofunctional isocyanates, such as Additive TI (trade name, produced by Sumika Bayer Urethane Co., Ltd.); and the like. These may be used alone, or in a combination of two or more. The amount of the dehydrating agent is 0.01 to 10 mass%, and preferably 0.1 to 5 mass% based on the binder solids content mass of the binder (YA) .

As the solvent, the solvents mentioned above in the "Hydroxy-containing Acrylic Resin (XA-1-1)" section with regard to the paint (X) can be preferably used.

The form of the paint (Y) is not particularly limited and may be any form of an aqueous paint, organic-solvent-based paint, or solventless paint. The term "aqueous paint" as used herein is used in contrast to "organic-solvent-based paint." In general, this term refers to a paint in which a coating film-forming resin, a pigment, and the like are dispersed and/or dissolved in water, or in a medium mainly consisting of water (aqueous medium) .

The coating film (Y*) of the paint (Y) has a cured film thickness of 10 μm or more, and a maximum spectral peak value of silicon (PS) and a maximum spectral peak value of carbon (PC), both present within 1 μm from a surface

in contact with air, obtained by high-frequency glow discharge optical emission spectroscopy (GDS) for element concentration analysis of the coating film (Y*) in the depth direction, preferably satisfy the following formula:

$$PS/(PS + PC) \geq 0.3.$$

The value of the formula: PS/(PS + PC) is more preferably 0.4 or more, and particularly preferably 0.5 or more.

Within the above range, the alkoxysilyl-containing organopolysiloxane (and optionally contained silyl-containing acrylic resin) will be assembled at the outermost layer of the coating film, resulting in excellent stain resistance.

## 2. Multi-component Paint Composition

A second embodiment of the present invention provides a multi-component paint composition comprising a polysiloxane-containing component (I) and a catalyst-containing component (II), wherein the polysiloxane-containing component (I) or the catalyst-containing component (II), or both, contain a binder (YA), the polysiloxane-containing component (I) contains an alkoxysilyl-containing organopolysiloxane (YB), the catalyst-containing component (II) contains a catalyst (YC) that promotes hydrolysis condensation of alkoxysilyl, and the alkoxysilyl-containing organopolysiloxane (YB) has a solids content of 0.01 to 20 mass% based on the resin solids content of the binder (YA).

The paint composition of the present invention, which is a multi-component paint composition, has excellent storage stability. The term "multi-component paint composition" as used herein refers to a paint composition that is used by mixing two or more liquid components (preferably two liquid components) before application, and is distinguished from a "one-component paint composition," in which components are already mixed from the start of its production. The phrase "before application" includes mixing in a coating device, mixing in a pipe, mixing in a paint storage tank, and the like, all of which are suitable. From the viewpoint of storage stability, when to mix the paint composition is preferably 0.01 seconds to 3 months before application, more preferably 0.1 seconds to 10 days before application, and further preferably 0.1 seconds to 10 hours before application. The two liquids before mixing can also be referred to as a paint system comprising a first liquid comprising a polysiloxane-containing component (I) and a second liquid comprising a catalyst-containing component (II).

### Alkoxysilyl-containing Organopolysiloxane (YB)

The alkoxysilyl-containing organopolysiloxane (YB) is as described above for the alkoxysilyl-containing organopolysiloxane (YB) in the coating method according to the first embodiment.

The alkoxysilyl-containing organopolysiloxane (YB) contains organopolysiloxane containing hydrolyzable alkoxysilyl at a terminal or in a side chain of the molecule. The hydrolyzable alkoxysilyl in the molecule is hydrolyzed when in contact with moisture, water, and the like in the air and form silanol groups. These silanol groups undergo a reaction with each other or with other functional groups in the binder (YA) to increase the molecular weight, thus imparting stain resistance and durability to the coating film formed by using the paint composition of the present invention.

The alkoxysilyl-containing organopolysiloxane (YB) of the present invention preferably contains hydrocarbon, such as methyl or phenyl from the viewpoint of imparting water repellency to the coating film.

Examples of usable commercially available products of alkoxysilyl-containing organopolysiloxane (YB) include SR2406, SR2410, SR2420, SR2416, SR2402, and AY42-161 (all produced by Toray Dow Corning Silicone Co., Ltd.); FZ-3704 and FZ-3511 (both produced by Nippon Unicar Company Limited); KC-89S, KR-500, X-40-9225, X-40-9246, X-40-9250, KR-217, KR-9218, KR-213, KR-510, X-40-9227, X-40-9247, X-41-1053, X-41-1056, X-41-1805, X-41-1810, X-40-2651, X-40-2308, X-40-9238, X-40-2239, X-40-2327, KR-400, X-40-175, and X-40-9740 (all produced by Shin-Etsu Chemical Co., Ltd.); and the like.

The number average molecular weight of the alkoxysilyl-containing organopolysiloxane (YB) is preferably 500 to 2000 from the viewpoint of compatibility with paints.

An extremely small amount of the alkoxysilyl-containing organopolysiloxane (YB) in the paint composition cannot achieve stain resistance (prevention of stain adhesion or removal of stains), while an excessive amount causes deterioration of tackiness of the coating surface. Therefore, the solids content of the alkoxysilyl-containing organopolysiloxane (YB) is 0.01 to 20 mass%, preferably 0.1 to 10 mass%, and more preferably 0.2 to 8 mass% based on the binder solids content of the binder (YA).

### Catalyst (YC) that Promotes Hydrolysis Condensation of Alkoxysilyl

The catalyst (YC) that promotes hydrolysis condensation of alkoxysilyl is as described above for the catalyst (C) that promotes hydrolysis condensation of alkoxysilyl in the coating method of the first embodiment.

The catalyst (YC) that promotes hydrolysis condensation of alkoxysilyl is a curing catalyst that promotes hydrolysis condensation of hydrolyzable alkoxysilyl contained in the alkoxysilyl-containing organopolysiloxane (YB) contained in the paint composition of the present invention, and hydrolyzable alkoxysilyl contained in the silyl-containing acrylic resin (YA-1-3) optionally contained in the paint composition of the present invention.

The catalyst (YC) that promotes hydrolysis condensation of alkoxysilyl may be a known catalyst for hydrolysis condensation without particular limitation. Specific examples include organic tin compounds, organic aluminum compounds, organic titanium compounds, organic zirconium compounds, organic zinc compounds, organic cobalt compounds, boric acid compounds, sulfonic acid compounds, sulfonic acid salt compounds, aminosilane compounds, quaternary ammonium salt compounds, tertiary amine compounds, phosphate compounds, phosphite compounds, and the like.

Examples of organic tin compounds include diacetyltin diacetate, dibutyltin dilaurate, dibutyltin diacetate, dioctyltin dilaurate, diacetyltin dioctoate, tin octylate, dibutyltin diacetate, dibutyltin dioctoate, and the like.

Examples of organic aluminum compounds include aluminum trimethoxide, aluminum tris(acetylacetonate), aluminum tri-n-butoxide, aluminum tris(ethylacetoacetate), aluminum diisopropoxy(ethyl acetoacetate), aluminum acetylacetonate, and the like.

Examples of organic titanium compounds include titanium tetra(monoethyl ethoxide), titanium tetra(monoethyl ethoxide), titanium tetra(monobutyl ethoxide), titanium tetrakis(acetylacetonate), tetranormal butyl titanate, and the like.

Examples of organic zirconium compounds include zirconium tetra(monomethyl ethoxide), zirconium tetra(monoethyl ethoxide), zirconium tetra(monobutyl ethoxide), zirconium normal propylate, zirconium normal butyrate, zirconium tetrakis(acetylacetonate), and the like.

Examples of organic zinc compounds include zinc naphthenate and the like.

Examples of organic cobalt compounds include cobalt octylate, cobalt naphthenate, and the like.

Examples of boric acid compounds include trimethyl borate, triethyl borate, tripropyl borate, tributyl borate, triphenyl borate, tri(4-chlorophenyl) borate, trihexafluoroisopropyl borate, and the like.

Examples of sulfonic acid compounds include methanesulfonic acid, benzenesulfonic acid, p-toluene sulfonic acid, sulfuric acid, and the like.

Examples of sulfonic acid salt compounds include pyridinium p-toluene sulfonate and the like.

Examples of aminosilane compounds include γ-aminopropyltrimethoxysilane, γ-aminopropyltriethoxysilane, and the like.

Examples of quaternary ammonium salt compounds include tetramethyl ammonium chloride, benzalkonium chloride, and the like.

Examples of tertiary amine compounds include compounds containing a plurality of nitrogen atoms, such as guanidine and amidine, and the like.

Examples of phosphate compounds include trimethyl phosphate, triethyl phosphate, tripropyl phosphate, tributyl phosphate, trihexyl phosphate, tris(2-ethylhexyl) phosphate, trioctyl phosphate, trinonyl phosphate, tridecyl phosphate, trilauryl phosphate, trimyristyl phosphate, tricetyl phosphate, tristearyl phosphate, trioleyl phosphate, tribehenyl phosphate, monomethyl phosphate, dimethyl phosphate, monoethyl phosphate, diethyl phosphate, monopropyl phosphate, dipropyl phosphate, monoisopropyl phosphate, diisopropyl phosphate, monobutyl phosphate, dibutyl phosphate, monopentyl phosphate, dipentyl phosphate, monohexyl phosphate, dihexyl phosphate, monooctyl phosphate, dioctyl phosphate, mono 2-ethylhexyl phosphate, di 2-ethylhexyl phosphate, monodecyl phosphate, didecyl phosphate, monoisodecyl phosphate, diisodecyl phosphate, monoundecyl phosphate, diundecyl phosphate, monododecyl phosphate, didodecyl phosphate, monotetradecyl phosphate, ditetradecyl phosphate, monohexadecyl phosphate, dihexadecyl phosphate, monooctadecyl phosphate, dioctadecyl phosphate, monophenyl phosphate, diphenyl phosphate, monobenzyl phosphate, dibenzyl phosphate, and the like.

Examples of phosphite compounds include triphenyl phosphite, diphenyl phosphite, tri-o-tolyl phosphite, di-o-tolyl phosphite, tri-m-tolyl phosphite, di-m-tolyl phosphite, tri-p-tolyl phosphite, di-p-tolyl phosphite, di-o-chlorophenyl phosphite, tri-p-chlorophenyl phosphite, di-p-chlorophenyl phosphite, and the like.

These catalysts (YC) may be used alone, or in a combination of two or more.

The catalyst (YC) preferably has a number average molecular weight of 2000 or less, more preferably 1800 or less, and still more preferably 1500 or less.

The catalyst (YC) is incorporated in an amount of 0.01 to 10 mass%, and preferably 0.1 to 7 mass% based on the binder solids content mass of the binder (YA).

Binder (YA)

The binder (YA) preferably contains a hydroxy-containing resin (YA-1) and a curing agent (YA-2).

The binder (YA), hydroxy-containing resin (YA-1), and curing agent (YA-2) are as described above for the binder (YA), hydroxy-containing resin (YA-1), and curing agent (YA-2) in the coating method of the first embodiment.

Hydroxy-containing Resin (YA-1)

Examples of the types of the hydroxy-containing resin (YA-1) include hydroxy-containing acrylic resins, polyester resins, urethane resins, epoxy resins, polyether resins, alkyd resins, polycarbonate resins, fluorine resins, and composite resins thereof. In particular, a hydroxy-containing acrylic resin (YA-1-1) and/or a hydroxy-containing polyester resin (YA-1-2) are preferable.

Hydroxy-containing Acrylic Resin (YA-1-1)

The hydroxy-containing acrylic resin (YA-1-1) can be produced by copolymerizing a hydroxy-containing polymerizable unsaturated monomer and a polymerizable unsaturated monomer other than the hydroxy-containing polymerizable unsaturated monomer.

Examples of the hydroxy-containing polymerizable unsaturated monomer include monoesterified products of (meth)acrylic acid with a dihydric alcohol having 2 to 8 carbon atoms (e.g., 2-hydroxyethyl (meth)acrylate, 2-hydroxypropyl (meth)acrylate, 3-hydroxypropyl (meth)acrylate, and 4-hydroxybutyl (meth)acrylate); ε-caprolactone-modified products of such monoesterified products of (meth)acrylic acid with a dihydric alcohol having 2 to 8 carbon atoms; N-hydroxymethyl (meth)acrylamide; allyl alcohol; (meth)acrylates that include a hydroxy-terminated polyoxyalkylene chain; and the like. These may be used alone or in a combination of two or more.

Examples of the polymerizable unsaturated monomer other than the hydroxy-containing polymerizable unsaturated monomer include alkyl (meth)acrylates containing 3 or less carbon atoms, such as methyl (meth)acrylate, ethyl (meth)acrylate, n-propyl (meth)acrylate, and isopropyl (meth)acrylate; alkyl or cycloalkyl (meth)acrylates, such as n-butyl (meth)acrylate, i-butyl (meth)acrylate, t-butyl (meth)acrylate, n-hexyl (meth)acrylate, octyl (meth)acrylate, 2-ethylhexyl (meth)acrylate, nonyl (meth)acrylate, tridecyl (meth)acrylate, lauryl (meth)acrylate, stearyl (meth)acrylate, isostearyl (meth)acrylate, cyclohexyl (meth)acrylate, methylcyclohexyl (meth)acrylate, t-butylcyclohexyl (meth)acrylate, cyclododecyl (meth)acrylate, and tricyclodecanyl (meth)acrylate; isobornyl-containing polymerizable unsaturated compounds, such as isobornyl (meth)acrylate; adamantyl-containing polymerizable unsaturated compounds, such as adamantyl (meth)acrylate; aromatic-ring-containing polymerizable unsaturated monomers, such as benzyl (meth)acrylate, styrene, α-methylstyrene, and vinyltoluene; carboxy-containing polymerizable unsaturated monomers, such as (meth)acrylic acid, maleic acid, crotonic acid, and β-carboxyethyl acrylate; nitrogen-containing polymerizable unsaturated monomers having no urethane bond, such as (meth)acrylonitrile, (meth)acrylamide, N,N-dimethylaminoethyl (meth)acrylate, N,N-diethylaminoethyl (meth)acrylate, N,N-dimethylaminopropyl (meth)acrylamide, and addition products of glycidyl (meth)acrylate with amines; urethane bond-containing polymerizable unsaturated monomers, such as a reaction product of an isocyanate-containing polymerizable unsaturated monomer and a hydroxy-containing compound, and a reaction product of a hydroxy-containing polymerizable unsaturated monomer and an isocyanate-containing compound; epoxy-containing polymerizable unsaturated monomers, such as glycidyl (meth)acrylate, β-methylglycidyl (meth)acrylate, 3,4-epoxycyclohexylmethyl (meth)acrylate, 3,4-epoxycyclohexylethyl (meth)acrylate, 3,4-epoxycyclohexylpropyl (meth)acrylate, and allyl glycidyl ether; (meth)acrylates having alkoxy-terminated polyoxyethylene chains; sulfonic acid group-containing polymerizable unsaturated monomers, such as 2-acrylamido-2-methylpropane-sulfonic acid, 2-sulfoethyl (meth)acrylate, allylsulfonic acid, and 4-styrenesulfonic acid, and sodium salts and ammonium salts of these sulfonic acids; phosphoric acid group-containing polymerizable unsaturated monomers, such as 2-acryloyloxyethyl acid phosphate, 2-methacryloyloxyethyl acid phosphate, 2-acryloyloxypropyl acid phosphate, and 2-methacryloyloxypropyl acid phosphate; perfluoroalkyl (meth)acrylates, such as perfluorobutylethyl (meth)acrylate, and perfluorooctylethyl (meth)acrylate; fluorinated alkyl-containing polymerizable unsaturated monomers, such as fluoroolefins; polymerizable unsaturated monomers having a photo-polymerizable functional group, such as maleimide; (meth)acrylates having alkoxy-terminated polyoxyethylene chains; polymerizable unsaturated monomers having two or more polymerizable unsaturated groups per molecule, such as allyl (meth)acrylate, ethylene glycol di(meth)acrylate, triethylene glycol di(meth)acrylate, tetraethylene glycol di(meth)acrylate, 1,3-butylene glycol di(meth)acrylate, trimethylol propane tri(meth)acrylate, 1,4-butanediol di(meth)acrylate, neopentyl glycol di(meth)acrylate, 1,6-hexanediol di(meth)acrylate, pentaerythritol di(meth)acrylate, pentaerythritol tetra(meth)acrylate, glycerol di(meth)acrylate, 1,1,1-tris-hydroxymethylethane di(meth)acrylate, 1,1,1-trishydroxymethylethane tri(meth)acrylate, 1,1,1-trishydroxymethylpropane tri(meth)acrylate, triallyl isocyanurate, diallyl terephthalate, and divinylbenzene; and the like. These may be used alone, or in a combination of two or more.

The acrylic resin may be produced by known polymerization methods. For example, the resin may be produced by solution polymerization of polymerizable unsaturated monomers in an organic solvent. However, the methods are not limited to this. For example, bulk polymerization, emulsion polymerization, suspension polymerization, or the like is also applicable. In solution polymerization, either continuous polymerization or batch polymerization may be performed, the polymerizable unsaturated monomers may be added all at once or in divided portions, and the addition may be performed successively or intermittently.

For the radical polymerization initiator used for polymerization, a known method can be used. Examples include peroxide-based polymerization initiators, such as cyclohexanone peroxide, 3,3,5-trimethylcyclohexanone peroxide, methylcyclohexanone peroxide, 1,1-bis(tert-butylperoxy)-3,3,5-trimethylcyclohexane, 1,1-bis(tert-butylperoxy)cyclohexane, n-butyl-4,4-bis(tert-butylperoxy)valerate, cumenehydroperoxide, 2,5-dimethylhexane-2,5-dihydroperoxide, 1,3-bis(tert-butylperoxy-m-isopropyl)benzene, 2,5-dimethyl-2,5-di(tert-butylperoxy)hexane, diisopropylbenzene peroxide, tert-butylcumyl peroxide, decanoyl peroxide, lauroyl peroxide, benzoyl peroxide, 2,4-dichlorobenzoyl peroxide, di-tert-amyl peroxide, bis(tert-butylcyclohexyl)peroxydicarbonate, tert-butylperoxy benzoate, 2,5-dimethyl-2,5-di(benzoylperoxy)hexane, and tert-butyl peroxy-2-ethylhexanoate; and azo-based polymerization initiators, such as 2,2'-azobis(isobutyronitrile), 1,1-azobis(cyclohexane-1-carbonitrile), azocumene, 2,2'-azobis(2-methylbutyronitrile), 2,2'-azobisdimethylvaleronitrile, 4,4'-azobis(4-cyanovaleric acid), 2-(t-butylazo)-2-cyanopropane, 2,2'-azobis(2,4,4-trimethylpentane), 2,2'-azobis(2-methylpropane), and dimethyl 2,2'-azobis(2-methylpropionate). These may be used alone, or in a combination of two or more.

The solvents used in the above polymerization or dilution are not particularly limited. Examples include water, organic solvents, mixtures thereof, and the like. Examples of organic solvents include hydrocarbon solvents, such as n-butane, n-hexane, n-heptane, n-octane, cyclopentane, cyclohexane, and cyclobutane; aromatic-based solvents, such as toluene and xylene; ketone-based solvents, such as methyl isobutyl ketone; ether-based solvents, such as n-butyl ether, dioxane, ethylene glycol monomethyl ether, ethylene glycol monoethyl ether, ethylene glycol monoethyl ether, ethylene glycol monobutyl ether, and diethylene glycol; ester-based solvents, such as ethyl acetate, n-butyl acetate, isobutyl acetate, ethylene glycol monomethyl ether acetate, and butylcarbitol acetate; ketone-based solvents, such as methyl ethyl ketone, methyl isobutyl ketone, and diisobutyl ketone; alcohol-based solvents, such as ethanol, isopropanol, n-butanol, sec-butanol, and isobutanol; amide-based solvents, such as Equamide (trade name, produced by Idemitsu Kosan Co., Ltd.), N,N-dimethylformamide, N,N-dimethylacetamide, N-methylformamide, N-methylacetamide, N-methylpropionamide, N-methyl-2-pyrrolidone; and other known solvents. These may be used alone, or in a combination of two or more.

Examples of usable methods for solution polymerization in an organic solvent include a method comprising mixing a polymerization initiator, polymerizable unsaturated monomer components, and an organic solvent, and performing heating while stirring; and a method comprising introducing an organic solvent in a reaction vessel to prevent an increase in the temperature of the system due to the reaction heat, and adding polymerizable unsaturated monomer components and a polymerization initiator dropwise separately or in combination over a predetermined time with stirring at a temperature of 60 to 200°C while optionally blowing an inert gas, such as nitrogen or argon.

In general, polymerization may be performed for about 1 to 10 hours. After the polymerization of each step, an additional catalyst step may be optionally performed that comprises heating the reaction vessel while adding a polymerization initiator dropwise.

The hydroxy-containing acrylic resin has a weight average molecular weight of preferably 1000 to 100000, and more preferably 3000 to 50000.

In the present specification, the number average molecular weight and weight average molecular weight refer to values determined by converting the retention time (retention volume) measured with gel permeation chromatography (GPC) into a molecular weight of a polystyrene based on the retention time (retention volume) of a polystyrene standard with a known molecular weight measured under the same conditions. More specifically, the measurement is performed using an HLC8120GPC gel permeation chromatography apparatus (trade name, produced by Tosoh Corporation) together with four columns (TSKgel G-4000HXL, TSKgel G-3000HXL, TSKgel G-2500HXL, and TSKgel G-2000XL; trade names, all produced by Tosoh Corporation) under the following conditions: mobile phase, tetrahydrofuran; measurement temperature, 40°C; flow rate, 1 mL/min; and detector, RI.

As the hydroxy-containing resin (YA-1), it is preferable to contain at least one silyl-containing acrylic resin (YA-1-3) from the viewpoint of imparting stain resistance to the resulting multilayer coating film for a long period of time.

The silyl-containing acrylic resin (YA-1-3) can be produced in the same manner as the resins mentioned above in the "Hydroxy-containing Acrylic Resin (YA-1-1)" section. Silyl groups can be introduced into the acrylic resin by using a hydrolyzable silyl-containing polymerizable unsaturated monomer (a1) as a starting polymerizable unsaturated monomer material for copolymerization.

The hydrolyzable silyl-containing polymerizable unsaturated monomer (a1) is a monomer component for reacting with alkoxysilyl of the alkoxysilyl-containing organopolysiloxane (YB) to impart long-term stain resistance (prevention of stain adhesion or removal of stains). The hydrolyzable silyl-containing polymerizable unsaturated monomer (a1) includes a compound containing a polymerizable double bond and a hydrolyzable silyl group per molecule. Specific examples include vinyl tri(C1-C6 alkoxy)silane, such as vinyltrimethoxysilane, vinyltriethoxysilane, and vinyltris(2-methoxyethoxy)silane; vinyl tri(C2-C6 alkanoyloxy)silane, such as vinyltriacetoxysilane; (meth)acryloyloxyalkyltri-C1-C6 alkoxysilane, such as β-(meth)acryloyloxyethyltrimethoxysilane, γ-(meth)acryloyloxypropyltrimethoxysilane, and γ-(meth)acryloyloxypropyltriethoxysilane; and the like. These may be used alone, or in a combination of two or more.

The silyl-containing acrylic resin (YA-1-3) preferably contains the hydrolyzable silyl-containing polymerizable

unsaturated monomer (a1) in an amount of 1 to 60 mass%, and more preferably 10 to 40 mass%.

In addition to the hydrolyzable silyl-containing polymerizable unsaturated monomer (a1), the silyl-containing acrylic resin (YA-1-3) may further contain a siloxane macromonomer (a2). The siloxane macromonomer (a2) is a monomer component for introducing polysiloxane chains into the acrylic resin and imparting water repellency to the surface of the resulting coating film. Specific examples include compounds represented by the following formulas (1) and (2).

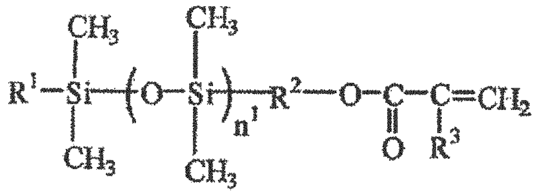

(1)

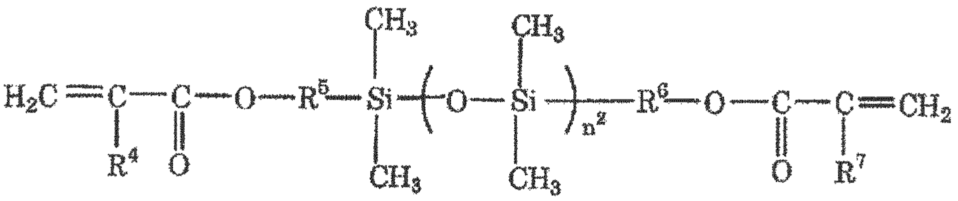

(2)

(In the formula,

$R^1$ represents an alkyl group containing 1 to 10 carbon atoms,
$R^2$ represents a divalent hydrocarbon group containing 1 to 6 carbon atoms,
$R^3$ represents a hydrogen atom or a methyl group,
$R^4$ and $R^7$ are identical or different, and each represents a hydrogen atom or a methyl group,
$R^5$ and $R^6$ are identical or different, and each represents a divalent hydrocarbon group containing 1 to 6 carbon atoms, and
$n^1$ and $n^2$ each indicate the number of repeating dimethyl siloxane units, and are each 6 to 300, and preferably 6 to 100.)

The siloxane macromonomer (a2) usually can have a number average molecular weight of 300 to 30000, and preferably 500 to 20000.

As the amount of the silyl-containing acrylic resin (YA-1-3) in the paint composition, the solids content of the silyl-containing acrylic resin (YA-1-3) is preferably 0 to 40 mass%, more preferably 1 to 35 mass%, and still more preferably 5 to 30 mass% based on the binder solids content mass of the binder (YA).

<u>Hydroxy-containing Polyester Resin (YA-1-2)</u>

The hydroxy-containing polyester resin (YA-1-2) can usually be produced by an esterification or transesterification reaction of an acid component with an alcohol component.

The acid component may be a compound that is usually used as an acid component for producing a polyester resin. Examples of such acid components include aliphatic polybasic acids, alicyclic polybasic acids, aromatic polybasic acids, and the like.

Generally, the aliphatic polybasic acids include aliphatic compounds having at least two carboxy groups per molecule; acid anhydrides of such aliphatic compounds; and esters of such aliphatic compounds. Examples of aliphatic polybasic acids include succinic acid, glutaric acid, adipic acid, pimelic acid, suberic acid, azelaic acid, sebacic acid, undecanedioic acid, dodecanedioic acid, brassylic acid, octadecanedioic acid, citric acid, butane tetracarboxylic acid, and like aliphatic polycarboxylic acids; anhydrides of such aliphatic polycarboxylic acids; esters of such aliphatic polycarboxylic acids with lower alkyls having about 1 to 4 carbon atoms; and the like. These aliphatic polybasic acids may be used alone, or in a combination of two or more.

Generally, the alicyclic polybasic acids include compounds having at least one alicyclic structure and at least two carboxy groups per molecule, acid anhydrides of such compounds, and esters of such compounds. The alicyclic structure is mostly a 4- to 6-membered ring structure. Examples of alicyclic polybasic acids include 1,2-cyclohexanedicarboxylic acid, 1,3-cyclohexanedicarboxylic acid, 1,4-cyclohexanedicarboxylic acid, 4-cyclohexene-1,2-dicarboxylic acid, 3-methyl-1,2-cyclohexanedicarboxylic acid, 4-methyl-1,2-cyclohexanedicarboxylic acid, 1,2,4-cyclohexanetricarboxylic acid, 1,3,5-cyclohexanetricarboxylic acid, and like alicyclic polycarboxylic acids; anhydrides of such alicyclic polycarboxylic acids; and esters of such alicyclic polycarboxylic acids with lower alkyls having about 1 to 4 carbon atoms. These alicyclic polybasic acids may be used alone, or in a combination of two or more.

Generally, the aromatic polybasic acids include aromatic compounds having at least two carboxy groups per molecule; acid anhydrides of such aromatic compounds; and esters of such aromatic compounds. Examples of aromatic polybasic acids include phthalic acid, isophthalic acid, terephthalic acid, naphthalenedicarboxylic acid, 4,4'-biphenyldicarboxylic acid, trimellitic acid, pyromellitic acid, and like aromatic polycarboxylic acids; anhydrides of such aromatic polycarboxylic acids; and esters of such aromatic polycarboxylic acids with lower alkyls having about 1 to 4 carbon atoms. Such aromatic polybasic acids may be used alone or in a combination of two or more.

Acid components other than the aliphatic polybasic acids, alicyclic polybasic acids, and aromatic polybasic acids mentioned above can also be used. Examples of the acid components include, but are not particularly limited to, coconut oil fatty acid, cottonseed oil fatty acid, hempseed oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, safflower oil fatty acid, and like fatty acids; lauric acid, myristic acid, palmitic acid, stearic acid, oleic acid, linolic acid, linolenic acid, benzoic acid, *p-tert*-butyl benzoic acid, cyclohexanoic acid, 10-phenyloctadecanoic acid, and like monocarboxylic acids; and lactic acid, 3-hydroxybutanoic acid, 3-hydroxy-4-ethoxybenzoic acid, and like hydroxycarboxylic acids. These acid components may be used alone, or in a combination of two or more.

Polyhydric alcohols having at least two hydroxy groups per molecule can be preferably used as the alcohol component mentioned above. Examples of the polyhydric alcohols include ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 2-methyl-1,3-propanediol, 3-methyl-1,2-butanediol, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecanedimethanol, hydroxypivalic acid neopentyl glycol ester, hydrogenated bisphenol A, hydrogenated bisphenol F, dimethylolpropionic acid, and like dihydric alcohols; polylactone diols obtained by adding lactone compounds, such as ε-caprolactone, to such dihydric alcohols; bis(hydroxyethyl) terephthalate and like ester diol compounds; alkylene oxide adducts of bisphenol A, polyethylene glycol, polypropylene glycol, polybutylene glycol, and like polyether diol compounds; glycerin, trimethylolethane, trimethylolpropane, diglycerin, triglycerin, 1,2,6-hexanetriol, pentaerythritol, dipentaerythritol, tris(2-hydroxyethyl)isocyanuric acid, sorbitol, mannitol, and like trihydric or higher alcohols; polylactone polyol compounds obtained by adding lactone compounds, such as ε-caprolactone, to such trihydric or higher alcohols; fatty acid esters of glycerin; and the like.

Alcohol components other than the polyhydric alcohols mentioned above can also be used. Examples of the alcohol components include, but are not particularly limited to, methanol, ethanol, propyl alcohol, butyl alcohol, stearyl alcohol, 2-phenoxyethanol, and like monohydric alcohols; and alcohol compounds obtained by reacting, with acids, propylene oxide, butylene oxide, Cardura E10 (trade name, produced by Hexion Specialty Chemicals; glycidyl ester of a synthetic highly branched saturated fatty acid), and like monoepoxy compounds.

The production method for the hydroxy-containing polyester resin is not particularly limited, and may be performed by any known method. For example, the acid component and the alcohol component are heated in a nitrogen stream at about 150 to 250°C for about 5 to 10 hours to carry out an esterification or transesterification reaction of the acid component with the alcohol component. The hydroxy-containing polyester resin can thereby be produced.

For the esterification or transesterification reaction of the acid component with the alcohol component, these components may be added to a reaction vessel at one time, or one or both of the components may be added in several portions. Further, a hydroxy-containing polyester resin may be first synthesized and then reacted with an acid anhydride for half-esterification to thereby obtain a carboxy- and hydroxy-containing polyester resin. Furthermore, a carboxy-containing polyester resin may be first synthesized, and the alcohol component may be then added to obtain a hydroxy-containing polyester resin.

For promoting the esterification or transesterification reaction, known catalysts are usable. Examples of known catalysts include dibutyltin oxide, antimony trioxide, zinc acetate, manganese acetate, cobalt acetate, calcium acetate, lead acetate, tetrabutyl titanate, tetraisopropyl titanate, and the like.

The hydroxy-containing polyester resin may be modified with a fatty acid, a monoepoxy compound, a polyisocyanate compound, or the like during or after the preparation of the resin.

As the solvent used for the polymerization or dilution, the solvents mentioned above in the "Hydroxy-containing Acrylic Resin (C-1-1)" section can be preferably used.

The hydroxy-containing polyester resin preferably has a hydroxy value of about 1 to 200 mgKOH/g, more preferably about 2 to 180 mgKOH/g, and still more preferably about 5 to 170 mgKOH/g. When the hydroxy-containing polyester resin further contains a carboxy group, its acid value is preferably about 5 to 150 mgKOH/g, more preferably about 10 to 100 mgKOH/g, and still more preferably about 15 to 80 mgKOH/g. The number average molecular weight of the hydroxy-containing polyester resin is preferably about 500 to 50000, more preferably about 1000 to 30000, and

even more preferably about 1200 to 10000.

The hydroxy-containing polyester resin can be neutralized with a basic compound, if necessary. Examples of the basic compound include hydroxides of alkali metals or alkaline earth metals, such as sodium hydroxide, potassium hydroxide, lithium hydroxide, calcium hydroxide, and barium hydroxide; ammonia; primary monoamines such as ethylamine, propylamine, butylamine, benzylamine, monoethanolamine, 2,2-dimethyl-3-amino-1-propanol, 2-aminopropanol, 2-amino-2-methyl-1-propanol, and 3-aminopropanol; secondary monoamines, such as diethylamine, diethanolamine, di-n-propanolamine, diisopropanolamine, N-methylethanolamine, and N-ethylethanolamine; tertiary monoamines, such as dimethylethanolamine, trimethylamine, triethylamine, triisopropylamine, methyldiethanolamine, and 2-(dimethylamino)ethanol; polyamines such as diethylenetriamine, hydroxyethylaminoethylamine, ethylaminoethylamine, and methylaminopropylamine; and the like. These may be used alone, or in a combination of two or more.

Curing Agent (YA-2)

The curing agent (YA-2) is a compound capable of curing the paint composition of the present invention by reacting with hydroxy groups or functional groups, such as carboxy or epoxy, in the hydroxy-containing resin. Examples of the curing agent include amino resins, polyisocyanate compounds, blocked polyisocyanate compounds, epoxy-containing compounds, carboxy-containing compounds, carbodiimide-containing compounds, and the like. Of these, the curing agent is preferably at least one member selected from the group consisting of a melamine resin, a polyisocyanate compound, and a blocked polyisocyanate compound reactable with hydroxy. The curing agent is more preferably a polyisocyanate compound. The curing agent may be used alone, or in a combination of two or more.

Examples of the amino resins include partially or fully methylolated amino resins obtained by reacting amino components with aldehyde components. Examples of the amino components include melamine, urea, benzoguanamine, acetoguanamine, steroguanamine, spiroguanamine, dicyandiamide, and the like. Examples of the aldehyde components include formaldehyde, paraformaldehyde, acetaldehyde, benzaldehyde, and the like. The methylolated amino resins in which some or all of the methylol groups have been etherified with suitable alcohols are also usable. Examples of alcohols that can be used for the etherification include methyl alcohol, ethyl alcohol, n-propyl alcohol, i-propyl alcohol, n-butyl alcohol, i-butyl alcohol, 2-ethylbutanol, 2-ethylhexanol, and the like.

The amino resin is preferably a melamine resin. In particular, a methyl-etherified melamine resin obtained by etherifying some or all of the methylol groups of a partially or fully methylolated melamine resin with methyl alcohol; a butyl-etherified melamine resin obtained by etherifying some or all of the methylol groups of a partially or fully methylolated melamine resin with butyl alcohol; and a methyl-butyl mixed etherified melamine resin obtained by etherifying some or all of the methylol groups of a partially or fully methylolated melamine resin with methyl alcohol and butyl alcohol are preferable. A methyl-butyl mixed etherified melamine resin is more preferable.

The polyisocyanate compound is a compound having at least two isocyanate groups per molecule. Examples include aliphatic polyisocyanates, alicyclic polyisocyanates, aromatic-aliphatic polyisocyanates, aromatic polyisocyanates, derivatives of such polyisocyanates, and the like.

Examples of the aliphatic polyisocyanates include aliphatic diisocyanates, such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate, and methyl 2,6-diisocyanatohexanoate (common name: lysine diisocyanate); aliphatic triisocyanates such as 2-isocyanatoethyl 2,6-diisocyanatohexanoate, 1,6-diisocyanato-3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane; and the like.

Examples of the alicyclic polyisocyanates include alicyclic diisocyanates, such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), 4-methyl-1,3-cyclohexylene diisocyanate (common name: hydrogenated TDI), 2-methyl-1,3-cyclohexylene diisocyanate, 1,3- or 1,4-bis(isocyanatomethyl)cyclohexane (common name: hydrogenated xylylene diisocyanate) or mixtures thereof, methylenebis(4,1-cyclohexanediyl)diisocyanate (common name: hydrogenated MDI), and norbornane diisocyanate; alicyclic triisocyanates, such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethy-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)heptane, and 6-(2-isocyanatoethyl)-2-isocyanatomethyl-2-(3-isocyanatopropyl)-bicyclo(2.2.1)heptane; and the like.

Examples of the aromatic-aliphatic polyisocyanates include aromatic-aliphatic diisocyanates, such as methylenebis(4,1-phenylene)diisocyanate (common name: MDI), 1,3- or 1,4-xylylene diisocyanate or mixtures thereof, ω,ω'-diisocyanato-1,4-diethylbenzene, and 1,3- or 1,4-bis(1-isocyanato-1-methylethyl)benzene (common name: tetramethylxylylene diisocyanate) or mixtures thereof; aromatic-aliphatic triisocyanates, such as 1,3,5-triisocyanatomethylbenzene; and the like.

Examples of the aromatic polyisocyanates include aromatic diisocyanates, such as m-phenylene diisocyanate, p-phenylene diisocyanate, 4,4'-diphenyl diisocyanate, 1,5-naphthalene diisocyanate, 2,4-tolylene diisocyanate (common name: 2,4-TDI), or 2,6-tolylene diisocyanate (common name: 2,6-TDI) or mixtures thereof, 4,4'-toluidine diisocyanate, and 4,4'-diphenylether diisocyanate; aromatic triisocyanates, such as triphenylmethane-4,4',4''-triisocyanate, 1,3,5-triisocyanatobenzene, and 2,4,6-triisocyanatotoluene; aromatic tetraisocyanates, such as 4,4'-diphenylmethane-2,2',5,5'-tetraisocyanate; and the like.

Examples of the polyisocyanate derivatives include dimers, trimers, biurets, allophanates, urethodiones, urethoimines, isocyanurates, oxadiazinetriones, polymethylene polyphenyl polyisocyanates (crude MDI, polymeric MDI), crude TDI, and the like, of the polyisocyanates mentioned above.

The above polyisocyanates and derivatives thereof may be used alone, or in a combination of two or more.

The polyisocyanate compound may be a blocked polyisocyanate compound in which the isocyanate groups of a polyisocyanate compound mentioned above are blocked. Preferable examples of blocking agents include phenol compounds; lactam compounds; alcohol compounds; oxime compounds; mercaptan compounds; dimethyl malonate; active methylene compounds, such as diethyl malonate; and the like. Blocking can be easily performed by mixing an unblocked polyisocyanate compound with a blocking agent. These polyisocyanate compounds may be used alone, or in a combination of two or more. It is also possible to use an unblocked polyisocyanate compound and a blocked polyisocyanate compound in combination.

The amount of the curing agent (YA-2) is usually 0 to 60 mass%, and preferably 20 to 40 mass% based on the solids content of the binder (YA).

Other Components

Examples of other components contained in the paint composition of the present invention include pigments, additives, solvents, and the like. These components are incorporated, if necessary.

Examples of the pigments include color pigments, extender pigments, effect pigments, and the like. These pigments may be used alone, or in a combination of two or more.

Examples of the color pigments include titanium oxide, zinc oxide, carbon black, molybdenum red, Prussian blue, cobalt blue, azo pigments, phthalocyanine pigments, quinacridone pigments, isoindoline pigments, threne pigments, perylene pigments, dioxazine pigments, diketopyrrolopyrrole pigments, and the like. Of these, titanium oxide can be preferably used from the viewpoint of impact resistance, in particular, impact resistance and the like at low temperatures, of the formed coating film.

Examples of the extender pigments include clay, kaolin, barium sulfate, barium carbonate, calcium carbonate, talc, silica, alumina white, and the like. Of these, clay, calcium carbonate, and talc can be preferably used from the viewpoint of impact resistance, in particular, impact resistance and the like at low temperatures, of the formed coating film.

Examples of the effect pigments include aluminum (including vapor-deposition aluminum), copper, zinc, brass, nickel, glass flakes, aluminum oxide, mica, titanium oxide- and/or iron oxide-coated aluminum oxide, titanium oxide- and/or iron oxide-coated mica, and the like. Examples of aluminum pigments include non-leafing type aluminum pigments and leafing type aluminum pigments. Any of these pigments can be used.

These pigments may be added directly to the paint composition, or may be first mixed with and dispersed in a pigment dispersant or pigment dispersion resin to form a paste, and then added to the paint. The pigment dispersant, the pigment dispersion resin, and the dispersion method may be a known pigment dispersant, a known pigment dispersion resin, and a known dispersion method.

Examples of the additives include known additives for paints, such as ultraviolet absorber (e.g., benzotriazole absorbers, triazine absorbers, salicylic acid derivative absorbers, benzophenone absorbers), light stabilizers (e.g., hindered amine light stabilizers), thickeners, defoaming agents, surface adjusting agents, anti-settling agents, rust preventive agents, chelating agents (e.g., acetylacetone), dehydrating agents, neutralizing agents, plasticizers, and the like.

From the viewpoint of suppressing hydrolysis, it is preferable to contain a dehydrating agent. The dehydrating agent may be known dehydrating agents. Specific examples include metal alkoxides, such as aluminum isopropylate, aluminum sec-butyrate, tetraisopropyl titanate, tetranormal butyl titanate, zirconium normal butyrate, ethyl silicate, and vinyltrimethoxysilane; organic alkoxy compounds, such as methyl orthoformate, ethyl orthoformate, methyl orthoacetate, ethyl orthoacetate, isopropyl orthoacetate, and dimethoxypropane; monofunctional isocyanates, such as Additive TI (trade name, produced by Sumika Bayer Urethane Co., Ltd.); and the like. These may be used alone, or in a combination of two or more. The amount of the dehydrating agent is 0.01 to 10 mass%, and preferably 0.1 to 5 mass% based on the binder solids content mass of the binder (YA).

As the solvent, the solvents mentioned above in the "Hydroxy-containing Acrylic Resin (YA-1-1)" section can be preferably used.

The form of the paint composition of the present invention is not particularly limited and may be any form of an aqueous paint, organic-solvent-based paint, or solventless paint. The term "aqueous paint" as used herein is used in contrast to "organic-solvent-based paint." In general, this term refers to a paint in which a coating film-forming resin, a pigment, and the like are dispersed and/or dissolved in water, or in a medium mainly consisting of water (aqueous medium). When the binder (YA) contains the hydroxy-containing resin (YA-1) and the curing agent (YA-2), the multi-component paint composition of the present invention preferably comprises the following combination (1) or (2), and more preferably comprises combination (1):

(1) the polysiloxane-containing component (I) containing the hydroxy-containing resin (YA-1), and the catalyst-containing component (II) containing the curing agent (YA-2); or
(2) the polysiloxane-containing component (I) containing the curing agent (YA-2), and the catalyst-containing component (II) containing the hydroxy-containing resin (YA-1).

Coating Method

The thus-obtained paint composition according to the second embodiment of the present invention can be applied to a substrate.
Examples of the coating method include known methods such as atomization coating (air-spray coating, airless spray coating, rotary atomization coating), brush coating, dip coating, and roll coating.
Examples of the substrate include, but are not particularly limited to, a surface of various base materials, and a surface of cured or uncured coating films of paints.
Examples of base materials include metals, such as iron, zinc, iron-zinc alloys, and steel plates; inorganic base materials, such as wood, concrete, gypsum board, slate, siding materials, porcelain tile wall surfaces, lightweight cellular concrete, mortar, brick, stone materials, and glass; plastic base materials; leather; fibers; and the like.
The surface of cured or uncured coating films of paints is not particularly limited. Examples include a top coating film formed by applying a solid color paint, a top coating film formed by applying a metallic paint, a top coating film formed by applying an interference paint, a top coating film formed by applying a clear paint, a multilayer coating film formed by sequentially applying two or more topcoat paints selected from solid color paints, metallic paints, and clear paints, and the like.
An uncured coating film obtained by applying the paint composition according to the second embodiment of the present invention to the substrate may be subjected to preheating (preliminary drying) or air blowing under conditions in which the coating film is not substantially cured. Preheating is preferably performed at about 40 to 100°C, more preferably about 50 to 90°C, and still more preferably about 60°C or more and less than 80°C, for preferably about 30 seconds to 15 minutes, and more preferably about 1 to 10 minutes. The air blowing can be usually performed by blowing air heated to an ordinary temperature or to a temperature of about 25 to 80°C for about 30 seconds to 15 minutes to the coating surface of the substrate.
The uncured coating film is then heated to cure the coating film.
The uncured coating film can be cured by a general-purpose coating-film heating (baking) method, such as hot-air heating, infrared heating, or high-frequency heating. The uncured coating film is preferably heated at a temperature of 70 to 200°C, more preferably 80 to 160°C, for preferably 10 to 60 minutes, and more preferably 15 to 40 minutes. Under the above conditions, the uncured coating film is cured.
The cured film thickness of the coating film of the paint composition of the present invention is preferably 1 to 50 μm, and more preferably 10 to 40 μm.
The dry coating film of the paint composition has a film thickness of 10 μm or more, and a maximum spectral peak value of silicon (PS) and a maximum spectral peak value of carbon (PC), both present within 1 μm from a surface in contact with air, obtained by high-frequency glow discharge optical emission spectroscopy (GDS) for element concentration analysis of the coating film in the depth direction, preferably satisfy the following formula:

$$PS/(PS + PC) \geq 0.3.$$

The value of the formula: PS/(PS + PC) is more preferably 0.4 or more, and particularly preferably 0.5 or more.
Within the above range, the alkoxysilyl-containing organopolysiloxane (and optionally contained silyl-containing acrylic resin) will be assembled at the outermost layer of the coating film, resulting in excellent stain resistance.
It is also preferable that a coating film obtained by the following method has water and paraffin contact angles (front surface, back surface) that satisfy all of the following (1) to (4) :

(1) a water contact angle of a front surface of the coating film ≥ 90°,

(2) a water contact angle of the front surface of the coating film > a water contact angle of a back surface of the coating film + 10°,

(3) a paraffin contact angle of the front surface of the coating film ≥ 40°, and

(4) a paraffin contact angle of the front surface of the coating film > a paraffin contact angle of the back surface of the coating film + 10°.

Method for Preparing a Coating Film

The paint composition of the present invention is applied alone to a polypropylene plate, thermally cured at 140°C for 30 minutes, and then peeled off from the polypropylene plate to form a coating film. Here, a surface on the atmosphere side serves as a front surface, and a surface on the polypropylene plate side serves as a back surface.

Within the above range, the alkoxysilyl-containing organopolysiloxane (and optionally contained silyl-containing acrylic resin) will be assembled at the outermost layer of the coating film, resulting in excellent stain resistance. In the present invention, the high-frequency glow discharge optical emission spectroscopy (GDS) is measured using a GD-Profiler2 produced by HORIBA, Ltd.

The alkoxysilyl groups of the alkoxysilyl-containing organopolysiloxane (YB) are hydrolyzed to form silanol groups, which undergo a reaction with each other or with other reactive functional groups in the binder (YA) to increase the molecular weight, whereby stain resistance (a property of preventing stains from adhering or a property of removing stains) and durability can be imparted. Therefore, if the reaction of the alkoxysilyl-containing organopolysiloxane (YB) does not proceed well, stain resistance and durability are not imparted in an excellent manner.

When a paint composition comprises an appropriate amount of the alkoxysilyl-containing organopolysiloxane (YB), the reactivity of the alkoxysilyl-containing organopolysiloxane (YB) can be confirmed with the toluene extraction amount measured by the following method. The toluene extraction amount is preferably 50% or less, and more preferably 25% or less.

Method for Measuring Toluene Extraction Amount

The paint (Y) is applied to a tin plate degreased in advance to a cured film thickness of 35 μm, and the resulting product is allowed to stand at room temperature for 7 minutes and then heated at 140°C for 30 minutes to obtain a dry coating film.

A 5-cm x 5-cm surface of the coating film (Y*) of the paint (Y) is scraped off in an amount of about 0.05 g with a razor blade and placed in a 10-cc mayonnaise bottle. Then, 2.5 ml of toluene is added, and the resulting mixture is allowed to stand for 2 hours. Thereafter, 1 ml of the supernatant is weighed, the entire amount of the weighed supernatant is impregnated into filter paper to perform X-ray fluorescence analysis, and Si content is quantified from a calibration curve measured in advance.

$$\text{Toluene extraction rate (\%)} = (P_1 \times Q)/(P_2 \times R \times S) \times 100,$$

wherein $P_1$ represents a volume (ml) of toluene used for extracting the Si component from the coating film,

Q represents the Si content (g) quantified by X-ray fluorescence analysis,

$P_2$ represents a volume (ml) of toluene used in X-ray fluorescence analysis,

R represents a solids content (mass%) of the alkoxysilyl-containing organopolysiloxane (YB) based on the resin solids content of the binder (YA), and

S represents a mass (g) of the scraped coating film.

Examples

The present invention is described in more detail below with reference to Examples and Comparative Examples; however, the present invention is not limited thereto. In each example, "parts" denotes parts by mass, and "%" denotes mass%.

1. Production examples of various raw materials

Production Example 1: Production of hydroxy-containing acrylic resin No. 1

200 parts of Swasol 1000 (Note 1) and 150 pars of n-butanol were placed in a reaction vessel equipped with a thermometer, a thermostat, a stirrer, a reflux condenser, a nitrogen inlet tube, and a dropping funnel. After replacement with nitrogen, the resultant was maintained at 120°C (±10°C). A monomer mixture shown below was added dropwise

thereto over 3 hours.

Monomer mixture

Styrene: 200 parts
n-Butyl acrylate: 200 parts
2-Hydroxyethyl methacrylate: 300 parts
KBM-503 (Note 2): 300 parts
t-Butylperoxy-2-ethylhexanoate: 40 parts

1 hour after the completion of dropwise addition, a solution obtained by dissolving 5 parts of t-butylperoxy-2-ethylhexanoate in 200 parts of Swasol 1000 (Note 1) was added dropwise thereto over 1 hour. After the completion of dropwise addition, the resultant was further maintained for 1 hour at 120°C (±10°C), and Swasol 1000 (Note 1) was then added to adjust the solids content, finally obtaining a hydroxy-containing acrylic resin No. 1 solution having a solids content of 50%. The hydroxy-containing acrylic resin No. 1 had a hydroxy value of 130 mgKOH/g and a weight average molecular weight of 10000.

(Note 1) Swasol 1000: trade name, produced by Cosmo Oil Co., Ltd., an aromatic hydrocarbon solvent.
(Note 2) KBM-503: trade name, produced by Shin-Etsu Chemical Co., Ltd., 3-methacryloxypropyltrimethoxysilane.

Production Example 2: Production of hydroxy-containing acrylic resin No. 2

200 parts of Swasol 1000 (Note 1) and 150 parts of n-butanol were placed in a reaction vessel equipped with a thermometer, a thermostat, a stirrer, a reflux condenser, a nitrogen inlet tube, and a dropping funnel. After replacement with nitrogen, the resultant was maintained at 120°C (±10°C). A monomer mixture shown below was added dropwise thereto over 3 hours.

Monomer mixture

Styrene: 200 parts
n-Butyl acrylate: 500 parts
2-Hydroxyethyl methacrylate: 300 parts
t-Butylperoxy-2-ethylhexanoate: 40 parts

1 hour after the completion of dropwise addition, a solution obtained by dissolving 5 parts of t-butylperoxy-2-ethylhexanoate in 200 parts of Swasol 1000 (Note 1) was added dropwise thereto over 1 hour. After the completion of dropwise addition, the resultant was further maintained for 1 hour at 120°C (±10°C), and Swasol 1000 (Note 1) was then added to adjust the solids content, finally obtaining a hydroxy-containing acrylic resin No. 2 solution having a solids content of 50%. The hydroxy-containing acrylic resin No. 2 had a hydroxy value of 130 mgKOH/g and a weight average molecular weight of 10000.

Production Example 3: Production of hydroxy-containing acrylic resin No. 3

275 parts of methoxypropanol and 275 parts of isobutanol were placed in a reaction vessel equipped with a thermometer, a thermostat, a stirrer, a reflux condenser, a nitrogen inlet tube, and a dropping funnel. After replacement with nitrogen, the resultant was maintained at 110°C (±10°C). A monomer mixture shown below was added dropwise thereto over 3 hours.

Monomer mixture

Styrene: 250 parts
n-Butyl methacrylate: 275 parts

Isostearyl Acrylate (Note 3): 200 parts
4-Hydroxybutyl acrylate: 75 parts
Phosphate group-containing polymerizable monomer (Note 4): 150 parts
2-Methacryloyloxyethyl acid phosphate: 125 parts
Isobutanol: 100 parts
t-Butyl peroxyoctanoate: 40 parts

1 hour after the completion of dropwise addition, a mixture comprising 5 parts of t-butyl peroxyoctanoate and 200 parts of isopropanol was added dropwise thereto for 1 hour. Then, aging was performed for 1 hour, thereby obtaining a hydroxy-containing acrylic resin No. 3 solution having a solids content of 50%. The resin had an acid value, derived from the phosphate group, of 83 mgKOH/g, a hydroxy value, derived from the 4-hydroxybutyl acrylate, of 29 mgKOH/g, and a weight average molecular weight of 10000.

(Note 3) Isostearyl Acrylate: trade name, produced by Osaka Organic Chemical Industry, Ltd., branched higher alkyl acrylate.
(Note 4) Phosphate group-containing polymerizable monomer: 575 parts of monobutyl phosphoric acid and 410 parts of isobutanol were placed in a reaction vessel equipped with a thermometer, a thermostat, a stirrer, a reflux condenser, and a dropping funnel. After heating to 90°C, 425 parts of glycidyl methacrylate was added dropwise over 2 hours, and the resulting mixture was further stirred and aged for 1 hour. Thereafter, 590 parts of isopropanol was added, thereby obtaining a phosphate group-containing polymerizable monomer solution having a solids content of 50%. The resulting monomer had an acid value, derived from the phosphate group, of 285 mgKOH/g.

Production Example 4: Production of hydroxy-containing polyester resin No. 1

69 parts of 1,2-cyclohexanedicarboxylic anhydride, 86 parts of 1,4-cyclohexanedicarboxylic acid, 59 parts of 1,6-hexanediol, 25 parts of ethylene glycol, and 13 parts of trimethylolpropane were placed in a reaction vessel equipped with a thermometer, a thermostat, a stirrer, a reflux condenser, and a water separator. After heating from 160°C to 230°C over 3 hours, the resultant was maintained at 230°C while removing the condensed water with the water separator, and was allowed to react until the acid value reached 6 mgKOH/g. Then, the resultant was diluted with a mixed solvent of xylene/Swasol 1000 (Note 1) = 50/50 (mass ratio) to a solids content of 70%, thereby obtaining a hydroxy-containing polyester resin No. 1 solution. The resulting hydroxy-containing polyester resin No. 1 had an acid value of 6 mgKOH/g, a hydroxy value of 56 mgKOH/g, and a number average molecular weight of 3000.

Production Example 5: Production of non-aqueous dispersion-type acrylic resin

93 parts of heptane and 98 parts of the following 55% polymer dispersion stabilizer solution (Note 5) were placed in a four-necked flask equipped with a stirrer, a thermometer, a cooling tube, and a nitrogen gas inlet, and heated and refluxed. A mixture of 15 parts of styrene, 40 parts of methyl methacrylate, 30 parts of acrylonitrile, 15 parts of 2-hydroxyethyl methacrylate, and 1.5 parts of t-butylperoxy-2-ethylhexanoate was added dropwise over 3 hours, further followed by aging for 2 hours, thereby obtaining a non-aqueous dispersion-type acrylic resin. The resulting non-aqueous dispersion-type acrylic resin was a milky-white stable low-viscosity polymer dispersion having a mass solids concentration of 53%, a Gardner viscosity of B, and an average particle size (measured with an electron microscope) of 0.2 to 0.3 μm.

- Synthesis of polymer dispersion stabilizer solution (Note 5)

40 parts of isobutyl acetate and 40 parts of toluene were placed in a four-necked flask equipped with a stirrer, a thermometer, a cooling tube, and a nitrogen gas inlet, and heated and refluxed. A mixture of 10 parts of styrene, 49 parts of isobutyl methacrylate, 30 parts of 2-ethylhexyl methacrylate, 11 parts of 2-hydroxyethyl methacrylate, and 2 parts of azobisisobutyronitrile was added dropwise over 3 hours. After dropwise addition, aging was performed for 2 hours, thereby obtaining a polymer dispersion stabilizer solution. The resulting polymer dispersion stabilizer solution had a mass solids concentration of 55%, a Gardner viscosity of G, and a weight average molecular weight of 16000.

2. Production Examples and Examples relating to coating method comprising sequentially applying paint (X) and paint (Y), and thermally curing two layers simultaneously

Production Example 6: Production of paint (X-1)

18 parts (resin solids content: 9 parts) of the hydroxy-containing acrylic resin No. 3 solution obtained in Production

Example 3, 12.9 parts (resin solids content: 9 parts) of the hydroxy-containing polyester resin No. 1 solution obtained in Production Example 4, 10 parts of Barifine BF-20 (trade name, produced by Sakai Chemical Industry Co., Ltd., ultrafine barium sulfate), and 20 parts of xylene were placed in a wide-mouthed glass bottle, glass beads were added thereto, and the glass bottle was sealed. After dispersion using a paint shaker for 60 minutes, the glass beads were removed, thereby obtaining a pigment dispersion paste.

Subsequently, 60.9 parts of the obtained pigment dispersion paste, 62 parts of the hydroxy-containing acrylic resin No. 2 solution obtained in Production Example 2, 30 parts of the hydroxy-containing polyester resin No. 1 solution obtained in Production Example 4, 50 parts of U-VAN 28-60 (trade name, a butyl-etherified melamine resin, produced by Mitsui Chemicals, Inc., solids content: 60%, a curing agent), 18.9 parts of the non-aqueous dispersion-type acrylic resin obtained in Production Example 5, 13.5 parts of GX-180A (trade name, produced by Asahi Kasei Metals Co., Ltd., aluminum pigment paste, aluminum content: 74%, an effect pigment), and 3 parts of tris(2-ethylhexyl) phosphate were uniformly mixed. Then, a mixed solvent of xylene/Swasol 1000 (Note 1) = 50/50 (mass ratio) was added to adjust the viscosity at 20°C with a Ford Cup No. 4 to 12 seconds, thereby obtaining a paint (X-1).

Production Examples 7 to 14: Production of paints (X-2) to (X-9)

Paints (X-2) to (X-9) were obtained in the same manner as in Production Example 6, except that the formulations shown in the following Table 1 were used.

Table 1

| | | Production Example 6 | Production Example 7 | Production Example 8 | Production Example 9 | Production Example 10 | Production Example 11 | Production Example 12 | Production Example 13 | Production Example 14 |
|---|---|---|---|---|---|---|---|---|---|---|
| Name of paint (X) | | (X-1) | (X-2) | (X-3) | (X-4) | (X-5) | (X-6) | (X-7) | (X-8) | (X-9) |
| Hydroxy-containing resin (XA-1) | Acrylic resin No. 2 | 32 | 32 | 32 | 32 | 32 | 32 | 32 | 62 | 32 |
| | Polyester resin No.1 | 10 | 10 | 10 | 10 | 10 | 10 | 10 | 10 | 10 |
| Curing agent (XA-2) | U-VAN 28-60 | 30 | 30 | 30 | 30 | 30 | 30 | 30 | | 30 |
| Catalyst (C) | Tris(2-ethylhexyl) Phosphate | 3 | 1 | | | | | | 3 | |
| | Polyphosphoric acid (Note 6) | | | 3 | | | | | | |
| | Tributyl phosphate | | | | 3 | | | | | |
| | D-25 (Note 7) | | | | | 3 | | | | |
| | DX-9740 (Note 8) | | | | | | 3 | | | |
| | KP-390 ( Note 9) | | | | | | | 3 | | |

The amounts in Table 1 above are values of solids content.

(Note 6) Polyphosphoric acid: Linear condensed phosphoric acid obtained by dehydration condensation of orthophosphoric acid, number average molecular weight: 1500

(Note 7) D-25: trade name, an organic titanium compound, produced by Shin-Etsu Chemical Co., Ltd.

(Note 8) DX-9740: trade name, an organic aluminum compound, produced by Shin-Etsu Chemical Co., Ltd.

(Note 9) KP-390: trade name, a tertiary amine compound, produced by Shin-Etsu Chemical Co., Ltd.

Production Example 15: Production of paint (Y-1)

40 parts (resin solids content: 20 parts) of the hydroxy-containing acrylic resin No. 1 obtained in Production Example 1, 80 parts (resin solids content: 40 parts) of the hydroxy-containing acrylic resin No. 2 obtained in Production Example 2, 9.4 parts (resin solids content: 5 parts) of the non-aqueous dispersion-type acrylic resin obtained in Production Example 5, 35 parts of Sumidur N3300 (trade name, produced by Sumika Bayer Urethane Co., Ltd., an isocyanurate of hexamethylene diisocyanate, solids content: 100%, NCO content: 21.8%), 0.5 parts of X-40-9250 (trade name, alkoxysilyl-containing organopolysiloxane, produced by Shin-Etsu Chemical Co., Ltd.), 1 part of NEOSTANN U-100 (trade name, dibutyltin dilaurate, produced by Nitto Kasei Co., Ltd., solids content: 100%), 0.2 parts (solids content: 0.1 parts) of BYK-300 (trade name, produced by BYK-Chemie, a surface adjusting agent, active ingredient: 52%), 2.0 parts of TINUVIN 900 (trade name, a benzotriazole ultraviolet absorber, produced by BASF, active ingredient: 100%), 1 part of TINUVIN 292 (trade name, a hindered amine light stabilizer, produced by BASF, active ingredient: 100%), and 5 parts of methyl orthoacetate were uniformly mixed. Further, Swasol 1000 (Note 1) was added thereto, and the resulting mixture was sufficiently stirred with a disperser to adjust the viscosity at 20°C with a Ford Cup No. 4 to 25 seconds, thereby obtaining a paint (Y-1).

Production Examples 16 to 33: Production of paints (Y-2) to (Y-19)

Paints (Y-2) to (Y-19) were obtained in the same manner as in Production Example 15, except that the formulations shown in the following Tables 2 and 3 were used.

Table 2

| | | | Production Example 15 | Production Example 16 | Production Example 17 | Production Example 18 | Production Example 19 | Production Example 20 | Production Example 21 | Production Example 22 | Production Example 23 | Production Example 24 |
|---|---|---|---|---|---|---|---|---|---|---|---|---|
| Name of paint (Y) | | | (Y-1) | (Y-2) | (Y-3) | (Y-4) | (Y-5) | (Y-6) | (Y-7) | (Y-8) | (Y-9) | (Y-10) |
| Binder (YA) | | Acrylic resin No.1 (with Si) | 20 | 20 | 20 | 20 | 20 | 20 | 20 | 20 | 20 | 20 |
| | | odcrylic resin No.2 (without | 40 | 40 | 40 | 40 | 40 | 40 | 40 | 40 | 40 | 40 |
| | | Sumidur N3300 | 35 | 35 | 35 | 35 | 35 | 35 | 35 | 35 | 35 | 35 |
| | | Cymel 370 (Note 17) | | | | | | | | | | |
| Organo polysilo xane | with alkoxysllyl (YB) | X-40-9250 | 0.5 | | | | | 0.1 | 1 | 5 | 10 | 20 |
| | | XR31-B1410 (Note 10) | | 0.5 | | | | | | | | |
| | | KR-500 (Note 11) | | | 0.5 | | | | | | | |
| | | KR-510 (Note 12) | | | | 0.5 | | | | | | |
| | | KR-251 (Note 13) | | | | | 0.5 | | | | | |
| | without elkoxysilyl | DOWSIL SH200-350CS (Note 14) | | | | | | | | | | |
| | | DOWSIL SH200-1CS (Note 15) | | | | | | | | | | |
| | | BYK-SILCLEAN 3700 (Note 16) | | | | | | | | | | |
| Catalyst (C) | | Tris(2-ethylhexyl) phosphate | | | | | | | | | | |

Table 3

| | | | Production Example 25 | Production Example 26 | Production Example 27 | Production Example 28 | Production Example 29 | Production Example 30 | Production Example 31 | Production Example 32 | Production Example 33 |
|---|---|---|---|---|---|---|---|---|---|---|---|
| Name of paint (Y) | | | (Y-11) | (Y-12) | (Y-13) | (Y-14) | (Y-15) | (Y-16) | (Y-17) | (Y-18) | (Y-19) |
| Binder (YA) | | Acrylic resin No. 1 (with Si) | | 20 | 20 | | 20 | 20 | 20 | 20 | 20 |
| | | Acrylic resin No. 2 (without Si) | 60 | 40 | 40 | 60 | 40 | 40 | 40 | 40 | 40 |
| | | Sumidur N3300 | 35 | | 35 | 35 | 35 | 35 | 35 | 35 | 35 |
| | | Oymel 370 (Note 17) | | 35 | | | | | | | |
| Organo polysilo xane | with alkoxysilyl (YB) | X-40-9250 | 0.5 | 0.5 | 0.5 | | | | | | 25 |
| | | XR31-B1410 (Note 10) | | | | | | | | | |
| | | KR-500 (Note 11) | | | | | | | | | |
| | | KR-510 (Note 12) | | | | | | | | | |
| | | KR-251 (Note 13) | | | | | | | | | |
| | without alkoxysilyl | DOWSIL SH200-350CS (Note 14) | | | | | | 0.5 | | | |
| | | DOWSIL SH200-1CS (Note 15) | | | | | | | 0.5 | | |
| | | BYK-SILCLEAN 3700 (Note 16) | | | | | | | | 0.5 | |
| Catalyst (C) | | Tris(2-ethylhexyl) | | | 0.5 | | | | | | |

The amounts in the above tables are values of solids content.

(Note 10) XR31-B1410: trade name, produced by Momentive, alkoxysilyl-containing organopolysiloxane, number average molecular weight: 800

(Note 11) KR-500: trade name, alkoxysilyl-containing organopolysiloxane, produced by Shin-Etsu Chemical Co., Ltd., number average molecular weight: 900

(Note 12) KR-510: trade name, alkoxysilyl-containing organopolysiloxane, produced by Shin-Etsu Chemical Co., Ltd., number average molecular weight: 950

(Note 13) KR-251: trade name, alkoxysilyl-containing organopolysiloxane, produced by Shin-Etsu Chemical Co., Ltd., number average molecular weight: 3000 or more

(Note 14) DOWSIL SH200-350CS: trade name, organopolysiloxane, produced by Dow Toray Co., Ltd., number average molecular weight: 3000 or more

(Note 15) DOWSIL SH200-1CS: trade name, octamethyltrisiloxane, produced by Dow Toray Co., Ltd., number average molecular weight: 250

(Note 16) BYK-SILCLEAN 3700: trade name, a hydroxy-containing silicone-modified acrylic polymer, produced by BYK-Chemie, active ingredient: 25%, number average molecular weight: 3000 or more

(Note 17) Cymel 370: trade name, melamine resin, produced by Cytec Industries Japan, solids content: 88%

Example 1: Production of multilayer coating film (Z-1)

Electron GT-10 (produced by Kansai Paint Co., Ltd., trade name, a thermosetting epoxy resin cationic electrodeposition paint) was applied by electrodeposition to a dull steel plate (thickness: 0.8 mm) treated with zinc phosphate to a cured film thickness of 20 μm, and thermally cured at 170°C for 30 minutes. Then, Amilac TP-67-P (produced by Kansai Paint Co., Ltd., trade name, a polyester/melamine resin intermediate paint for automobiles, coating color: dark gray) was applied by air spray to a film thickness of 35 μm, and thermally cured at 140°C for 30 minutes, thereby obtaining a substrate.

Subsequently, the paint (X-1) was applied to the intermediate coating film to a cured film thickness of 15 μm, and preheated at 80°C for 5 minutes. Then, the paint (Y-1) was applied to the uncured coating film to a cured film thickness of 35 μm, and allowed to stand at room temperature for 7 minutes. These coating films were simultaneously baked and cured by heating at 140°C for 30 minutes, thereby obtaining a multilayer coating film (Z-1).

Examples 2 to 21 and Comparative Examples 1 to 8: Production of multilayer coating films (Z-2) to (Z-29)

Multilayer coating films (Z-2) to (Z-29) were obtained in the same manner as in Example 1, except for the conditions shown in the following Tables 4, 5, and 6.

Table 4

| | Example 1 | Example 2 | Example 3 | Example 4 | Example 5 | Example 6 | Example 7 | Example 8 | Example 9 | Example 10 |
|---|---|---|---|---|---|---|---|---|---|---|
| Name of multilayer coating film | (Z-1) | (Z-2) | (Z-3) | (Z-4) | (Z-5) | (Z-6) | (Z-7) | (Z-8) | (Z-9) | (Z-10) |
| Paint (X) | (X-1) | (X-2) | (X-3) | (X-4) | (X-5) | (X-6) | (X-7) | (X-8) | (X-1) | (X-1) |
| Paint (Y) | (Y-1) | (Y-1) | (Y-1) | (Y-1) | (Y-1) | (Y-1) | (Y-1) | (Y-1) | (Y-2) | (Y-3) |
| Preheating or baking (Note 18) | Preheating | Preheating | Preheating | Preheating | Preheating | Preheating | Preheating | Preheating | Preheating | Preheating |
| GDS measurement (Note 19) | A | B | A | A | A | A | B | A | S | A |
| Water contact angle of coating surface | 95 | 95 | 92 | 92 | 93 | 94 | 90 | 93 | 96 | 95 |
| Storage stability of paint (Y) | S | S | S | S | S | S | S | S | S | S |
| Stain resistance (initial) | S | A | A | A | S | S | S | S | S | S |
| Stain resistance (2 months later) | S | A | A | A | S | S | A | A | S | S |
| Tackiness | S | S | S | S | S | S | S | S | S | S |
| Repellency | S | S | S | S | S | S | S | S | S | S |

Table 5

| | Example 11 | Example 12 | Example 13 | Example 14 | Example 15 | Example 16 | Exampe 117 | Example 18 | I Example 19 | Example 20 |
|---|---|---|---|---|---|---|---|---|---|---|
| Name of multilayer coating film | (Z-11) | (Z-12) | (Z-13) | (Z-14) | (Z-15) | (Z-16) | (Z-17) | (Z-18) | (Z-19) | (Z-20) |
| Paint (X) | (X-1) | (X-1) | (X-1) | (X-1) | (X-1) | (X-1) | (X-1) | (X-1) | (X-1) | (X-1) |
| Paint (Y) | (Y-4) | (Y-5) | (Y-6) | (Y-7) | (Y-8) | (Y-9) | (Y-10) | (Y-11) | (Y-12) | (Y-13) |
| Preheating or baking (Note 18) | Preheating | Preheating | Preheating | Preheating | Preheating | Preheating | Preheating | Preheating | Preheating | Preheating |
| GDS measurement (Note 19) | A | S | B | A | S | S | S | A | A | A |
| Water contact angle of coating surface | 93 | 90 | 93 | 93 | 91 | 93 | 94 | 94 | 93 | 95 |
| Storage stability of paint (Y) | S | S | S | S | S | S | S | S | S | B |
| Stain resistance (initial) | S | S | A | S | S | S | S | A | S | S |
| Stain resistance (2 months later) | S | A | A | S | S | A | A | B | S | S |
| Tackiness | S | S | S | A | A | A | B | S | S | S |
| Repellency | S | B | S | S | S | S | S | S | S | B |

Table 6

| | Example 21 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| Name of multilayer coating film | (Z-21) | (Z-22) | (Z-23) | (Z-24) | (Z-25) | (Z-26) | (Z-27) | (Z-28) | (Z-29) |
| Paint (X) | (X-9) | (X-9) | (X-1) | (X-1) | (X-1) | (X-1) | (X-1) | (X-1) | (X-1) |
| Paint (Y) | (Y-13) | (Y-1) | (Y-1) | (Y-14) | (Y-15) | (Y-16) | (Y-17) | (Y-18) | (Y-19) |
| Preheating or baking (Note 18) | Preheating | Preheating | Baking | Preheating | Preheating | Preheating | Preheating | Preheating | Preheating |
| GDS measurement (Note 19) | A | A | A | C | C | A | A | A | S |
| Water contact angle of coating surface | 94 | 85 | 85 | 82 | 81 | 90 | 91 | 90 | 92 |
| Storage stability of paint (Y) | B | S | S | S | S | S | S | S | S |
| Stain resistance (initial) | S | C | C | C | C | C | C | C | S |
| Stain resistance (2 months later) | S | C | C | C | C | C | C | C | S |
| Tackiness | S | S | S | S | S | S | S | S | C |
| Repellency | B | S | S | S | S | S | S | S | S |

(Note 18) The paint (X) was applied to the substrate, and then baked and cured by heating at 140°C for 30 minutes, after which the paint (Y) was applied to the cured coating film.
(Note 19) GDS measurement: When element concentration analysis is performed in the depth direction of the coating film by using GD-Profiler2 (trade name, produced by Horiba Ltd., high-frequency glow discharge optical emission spectroscopy), a maximum spectral peak value of silicon (PS) and a maximum spectral peak value of carbon (PC), both present within 1 μm from the surface in contact with air, are calculated by the formula PS/(PS + PC). The obtained values are expressed as follows: less than 0.3: "C," 0.3 or more and less than 0.4: "B," 0.4 or more and less than 0.5: "A," and 0.5 or more: "S."

The multilayer coating films obtained in Examples 1 to 21 and Comparative Examples 1 to 8 were subjected to evaluation tests for the storage stability of the paint (Y), and the stain resistance (initial and 2 months later), tackiness, and repellency of the multilayer coating films, described later. The results are shown in Tables 4 to 6 above. As the evaluation, "S," "A," and "B" are acceptable, and "C" is failure. When at least one of the five evaluation tests is failure, the coating method is not acceptable.

3. Production Examples and Examples relating to multi-component paint compositions comprising polysiloxane-containing component

(I) and catalyst-containing component (II)

Production Example 34: Production of polysiloxane-containing component (I-1)

40 parts (resin solids content: 20 parts) of the hydroxy-containing acrylic resin No. 1 obtained in Production Example 1, 80 parts (resin solids content: 40 parts) of the hydroxy-containing acrylic resin No. 2 obtained in Production Example 2, 9.4 parts (resin solids content: 5 parts) of the non-aqueous dispersion-type acrylic resin obtained in Production Example 5, 0.5 parts of X-40-9250 (trade name, alkoxysilyl-containing organopolysiloxane, produced by Shin-Etsu Chemical Co., Ltd., number average molecular weight: 900), 1 part of NEOSTANN U-100 (trade name, dibutyltin dilaurate, produced by Nitto Kasei Co., Ltd., solids content: 100%), 0.2 parts (solids content: 0.1 parts) of BYK-300 (trade name, produced by BYK-Chemie, a surface adjusting agent, active ingredient: 52%), 2.0 parts of TINUVIN 900 (trade name, a benzotriazole ultraviolet absorber, produced by BASF, active ingredient: 100%), 1 part of TINUVIN 292 (trade name, a hindered amine light stabilizer, produced by BASF, active ingredient: 100%), and 5 parts of methyl orthoacetate were uniformly mixed. Further, Swasol 1000 (trade name, produced by Cosmo Oil Co., Ltd., a hydrocarbon solvent) was added thereto, and the resulting mixture was sufficiently stirred with a disperser to adjust the viscosity at 20°C with a Ford Cup No. 4 to 25 seconds, thereby obtaining a polysiloxane-containing component (I-1).

Production Examples 35 to 53: Production of polysiloxane-containing components (1-2) to (1-20)

Components (I-2) to (1-20) were obtained in the same manner as in Production Example 34, except that the formulations shown in the following Tables 7 and 8 were used.

Table 7

| | | Production Example 34 | Production Example 35 | Production Example 36 | Production Example 37 | Production Example 38 | Production Example 39 | Production Example 40 | Production Example 41 | Production Example 42 | Production Example 43 |
|---|---|---|---|---|---|---|---|---|---|---|---|
| Name of component (I) | | (I-1) | (I-2) | (I-3) | (I-4) | (I-5) | (I-6) | (I-7) | (I-8) | (I-9) | (I-10) |
| Siloxane | X-40-9250 | 0.5 | | | | | 0.1 | 1 | 5 | 10 | 20 |
| | XR31-B1410 (Note 10) | | 0.5 | | | | | | | | |
| | KR-500 (Note 11) | | | 0.5 | | | | | | | |
| | XR-510 (Note 12) | | | | 0.5 | | | | | | |
| | KR-251 (Note 13) | | | | | 0.5 | | | | | |
| | DOWSIL SH200-350CS [Note 14] | | | | | | | | | | |
| | DOWSIL SH200-1CS (Note 15) | | | | | | | | | | |
| | BYK-SILCLEAN 3700 (Note 16) | | | | | | | | | | |
| Hydroxy-containing resin (YA-1) | Acrylic resin No. 1 (with Si) | 20 | 20 | 20 | 20 | 20 | 20 | 20 | 20 | 20 | 20 |
| | Acrylic resin No. 2 (without Si) | 40 | 40 | 40 | 40 | 40 | 40 | 40 | 40 | 40 | 40 |
| Curing agent (YA-2) | Sumidur N3300 | | | | | | | | | | |
| | Cymel 370 (Note 17) | | | | | | | | | | |

Table 8

| | | Production Example 44 | Production Example 45 | Production Example 46 | Production Example 47 | Production Example 48 | Production Example 49 | Production Example 50 | Production Example 51 | Production Example 52 | Production Examole 53 |
|---|---|---|---|---|---|---|---|---|---|---|---|
| Name of component (I) | | (I-11) | (I-12) | (I-13) | (I-14) | (I-15) | (I-16) | (I-17) | (I-18) | (I-19) | (I-20) |
| Siloxane | X-40-9250 | 0.5 | 0.5 | 0.5 | 0.5 | | | | | | 25 |
| | XR31-B1410 (Note 10) | | | | | | | | | | |
| | KR-500 (Note 11) | | | | | | | | | | |
| | KR-510 (Note 12) | | | | | | | | | | |
| | KR-251 (Note 13) | | | | | | | | | | |
| | DOWSIL SF1200-350CS Note | 141 | 141 | 141 | 141 | 141 | 141 | 0.5 | | | |
| | DOWSIL SH200-1CS (Note 15) | | | | | | | | 0.5 | | |
| | BYK-SILCLEAN 3700 (Note 16) | | | | | | | | | 0.5 | |
| Hydroxy-containing resin (YA-1) | Acrylic resin No.1 (with Si) | | | 20 | 20 | | 20 | 20 | 20 | 20 | 20 |
| | Acrylic resin No.2 (without Si) | | 60 | 40 | | 60 | 40 | 40 | 40 | 40 | 40 |
| Curing agent | Sumidur N3300 | 35 | | | | | | | | | |
| (YA-2) | Cymel 370 (Note 17) | | | 35 | | | | | | | |

The amounts in the above tables are values of solids content.

Production Example 54: Production of catalyst-containing component (II-1)

35 parts of Sumidur N3300 (trade name, produced by Sumika Bayer Urethane Co., Ltd., an isocyanurate of hexamethylene diisocyanate, solids content: 100%, NCO content: 21.8%) and 0.5 parts of tris(2-ethylhexyl) phosphate were uniformly mixed. Further, Swasol 1000 (trade name, produced by Cosmo Oil Co., Ltd., a hydrocarbon solvent) was added thereto, and the resulting mixture was sufficiently stirred with a disperser to adjust the viscosity at 20°C with a Ford Cup No. 4 to 25 seconds, thereby obtaining a catalyst-containing component (II-1).

Production Examples 55 to 62: Production of catalyst-containing components (II-2) to (II-9)

Components (II-2) to (II-9) were obtained in the same manner as in Production Example 54, except that the formulations shown in the following Table 9 were used.

Table 9

| | | Production Example 54 | Production Example 55 | Production Example 56 | Production Example 57 | Production Example 58 | Production Example 59 | Production Example 60 | Production Example 61 | Production Example 62 |
|---|---|---|---|---|---|---|---|---|---|---|
| Name of component (II) | | (II-1) | (II-2) | (II-3) | (II-4) | (II-5) | (II-6) | (II-7) | (II-8) | (II-9) |
| Catalyst (C) | Tris(2-ethylhexyl) phosphate | 0.5 | 0.5 | 0.5 | 0.5 | | | | | |
| | D-25 (Note 7) | | | | | 0.5 | | | | |
| | DX-9740 (Note 8) | | | | | | 0.5 | | | |
| | KP-390 (Note 9) | | | | | | | 0,5 | | |
| | Tributyl phosphate | | | | | | | | 0.5 | |
| Hydroxy-containing resin (YA-1) | Acrylic resin No.2 (without Si) | | 60 | | 40 | | | | | |
| Curing agent (YA-2) | Sumidur N3300 | 35 | | | | 35 | 35 | 35 | 35 | 35 |
| | Cymel 370 (Note 17) | | | | 35 | | | | | |

The amounts in the above table are values of solids content.

Examples 22 to 39 and Comparative Example 9 to 16: Production of paints (Y-20) to (Y-45)

Components (I) and (II) shown in the following Tables 10, 11, and 12 were uniformly mixed with a disperser to obtain paints (Y-20) to (Y-45).

Table 10

| | Example 22 | Example 23 | Example 24 | Example 25 | Example 26 | Example 27 | Example 28 | Example 29 | Example 30 |
|---|---|---|---|---|---|---|---|---|---|
| Name of paint composition | (Y-20) | (Y-21) | (Y-22) | (Y-23) | (Y-24) | (Y-25) | (Y-26) | (Y-27) | (Y-28) |
| Polysiloxane-containing component (I) | (I-1) | (I-2) | (I-3) | (I-4) | (I-5) | (I-6) | (I-7) | (I-8) | (I-9) |
| Catalyst-containing component (II) | (II-1) | (II-1) | (II-1) | (II-1) | (II-1) | (II-1) | (II-1) | (II-1) | (II-1) |
| GDS measurement (Note 20) | A | A | A | A | A | B | A | S | S |
| Contact angle (front surface) (Note 21) | 94 | 94 | 92 | 93 | 92 | 91 | 93 | 94 | 92 |
| Contact angle (back surface) (Note 21 i | 83 | 82 | 80 | 82 | 81 | 82 | 82 | 83 | 82 |
| Paraffin contact angle (front surface) (Note 21) | 46 | 45 | 46 | 44 | 45 | 43 | 47 | 48 | 43 |
| Paraffin contact angle (back surface) (Note 21) | 24 | 30 | 25 | 28 | 30 | 29 | 30 | 31 | 26 |
| Toluene extraction rate (Note 22) | S | S | S | S | S | s | s | A | A |
| Storage stability of components (I) and (II) | S | S | S | S | S | S | S | S | S |
| Stain resistance (initial) | S | S | S | S | S | A | S | S | S |
| Stain resistance (2 months later) | S | S | S | S | A | A | S | S | A |
| Tackiness | S | S | S | S | S | S | A | A | A |
| Repellency | S | S | S | S | B | S | S | S | S |

Table 11

| | Example 31 | Example 32 | Example 33 | Example 34 | Example 35 | Example 36 | Example 37 | Example 38 | Example 39 |
|---|---|---|---|---|---|---|---|---|---|
| Name of paint composition | (Y-29) | (Y-30) | (Y-31) | (Y-32) | (Y-33) | (Y-34) | (Y-35) | (Y-36) | (Y-37) |
| Polysiloxane-containing component (I) | (I-10) | (I-11) | (I-12) | (I-13) | (I-14) | (I-1) | (I-1) | (I-1) | (I-1) |
| Catalyst-containing component (II) | (II-1) | (II-2) | (II-1) | (II-3) | (II-4) | (II-5) | (II-6) | (II-7) | (II-8) |
| GDS measurement (Note 20) | S | B | B | A | A | A | A | B | A |
| Contact angle (front surface) (Note 21) | 95 | 91 | 90 | 95 | 94 | 94 | 93 | 91 | 93 |
| Contact angle (back surface) (Note 21) | 83 | 81 | 80 | 83 | 82 | 84 | 82 | 80 | 81 |
| Paraffin contact angle (front surface) (Note 21) | 48 | 53 | 43 | 46 | 47 | 45 | 46 | 43 | 45 |
| Paraffin contact angle (back surface) (Note 21) | 32 | 23 | 28 | 23 | 25 | 28 | 28 | 30 | 29 |
| Toluene extraction rate (Note 22) | A | A | A | S | S | S | A | A | A |
| Storage stability of components (I) and (II) | S | S | S | S | S | S | S | S | S |
| Stain resistance (initial) | S | A | A | S | S | S | A | A | A |
| Stain resistance (2 months later) | A | B | B | S | S | S | A | A | A |
| Tackiness | B | S | S | S | S | S | S | S | S |
| Repellency | S | S | S | S | S | S | S | S | S |

Table 12

| | Comparative Example 9 | Comparative Example 10 | Comparative Example 11 | Comparative Example 12 | Comparative Example 13 | Comparative Example 14 | Comparative Example 15 | Comparative Example 16 | Comparative Example 17 |
|---|---|---|---|---|---|---|---|---|---|
| Name of paint composition | (Y-38) | (Y-39) | (Y-40) | (Y-41) | (Y-42) | (Y-43) | (Y-44) | (Y-45) | (Y-13) |
| Polysiloxane-containing component (I) | (I-1) | (I-15) | (I-16) | (I-16) | (I-17) | (I-18) | (I-19) | (I-20) | (I-1)+(II-1) one-component |
| Catalyst-containing component (II) | (II-9) | (II-1) | (II-1) | (II-9) | (II-1) | (II-1) | (II-1) | (II-1) | |
| GDS measurement (Note 20) | A | C | C | C | A | A | A | S | A |
| Contact angle (front surface) (Note 21) | 82 | 85 | 78 | 80 | 88 | 89 | 88 | 91 | 93 |
| Contact angle (back surface) (Note 21) | 77 | 82 | 77 | 78 | 80 | 80 | 79 | 75 | 82 |
| Paraffin contact angle (front surface) (Note 21) | 33 | 33 | 30 | 31 | 40 | 41 | 40 | 43 | 44 |
| Paraffin contact angle (back surface) (Note 21) | 29 | 32 | 29 | 30 | 30 | 29 | 30 | 30 | 30 |
| Toluene extraction rate (Note 22) | C | S | S | C | C | C | B | B | S |
| Storage stability of components (I) and (II) | S | S | S | S | S | S | S | S | C |

(continued)

| | Comparative Example 9 | Comparative Example 10 | Comparative Example 11 | Comparative Example 12 | Comparative Example 13 | Comparative Example 14 | Comparative Example 15 | Comparative Example 16 | Comparative Example 17 |
|---|---|---|---|---|---|---|---|---|---|
| Stain resistance (initial) | C | C | C | C | A | C | A | S | S |
| Stain resistance (2 months later) | C | C | C | C | C | C | C | A | S |
| Tackiness | S | S | S | S | S | S | S | C | S |
| Repellency | S | S | S | S | C | S | S | S | C |

The amounts in the above tables are values of solids content.
(Note 20) GDS measurement: Regarding the evaluation test color cards described later, when element concentration analysis is performed in the depth direction of the coating film by using GD-Profiler2 (trade name, produced by Horiba Ltd., high-frequency glow discharge optical emission spectroscopy), a maximum spectral peak value of silicon (PS) and a maximum spectral peak value of carbon (PC), both present within 1 μm from the surface in contact with air, are calculated by the formula PS/(PS + PC). The obtained values are expressed as follows: less than 0.3: "C," 0.3 or more and less than 0.4: "B," 0.4 or more and less than 0.5: "A," and 0.5 or more: "S."
The measurement was performed using two color cards for evaluation in the case of preheating an aqueous base coat (uncured) and in the case of thermally curing an aqueous base coat; however, there was no difference.
(Note 21) Contact angle: the contact angles, to water and paraffin, of a coating film prepared by the following method (front and back surfaces).

- Method for forming coating film for measuring contact angle

The paints obtained in the Examples and Comparative Examples were each applied to a polypropylene plate alone, thermally cured at 140°C for 30 minutes, and then removed from the polypropylene plate to prepare a coating film. The atmosphere side is regarded as a front surface, and the polypropylene plate side is regarded as a back surface.
(Note 22) Toluene extraction rate: the proportion of the Si component eluted when the cured coating film is immersed in toluene. This is measured and calculated in the following manner.

- Method for measuring and calculating the amount of toluene extract

The paints obtained in the Examples and Comparative Examples are each applied to a tin plate degreased in advance to a cured film thickness of 35 μm, and the resulting product is allowed to stand at room temperature for 7 minutes and then heated at 140°C for 30 minutes to obtain a dry coating film. A 5-cm × 5-cm surface of the obtained dry coating film is scraped off in an amount of about 0.05 g with a razor blade and placed in a 10-cc mayonnaise bottle, and 2.5 ml of toluene is added, and the resulting mixture is allowed to stand for 2 hours. 1 ml of the supernatant is weighed, the entire amount of the weighed supernatant is impregnated into filter paper to perform X-ray fluorescence analysis, and Si content is quantified from a calibration curve measured in advance.

$$\text{Toluene extraction rate (\%)} = (P_1 \times Q)/(P_2 \times R \times S) \times 100$$

$P_1$: Volume (ml) of toluene used for extracting the Si component from the coating film
Q: Si content (g) quantified by X-ray fluorescence analysis
$P_2$: Volume (ml) of toluene used in X-ray fluorescence analysis
R: Solids content (mass%) of the alkoxysilyl-containing organopolysiloxane (YB) based on the resin solids content of the binder (YA)
S: Mass (g) of the scraped coating film

The paint compositions of Examples 22 to 39 and Comparative Examples 9 to 17 were subjected to evaluation tests for the storage stability of the components (I) and (II), and the stain resistance (initial and 2 months later), tackiness, and repellency of the coating films, described later. The results are shown in Tables 10 to 12 above. As the evaluation, "S," "A," and "B" are acceptable, and "C" is failure. When at least one of the five evaluation tests is failure, the coating method is not acceptable. The evaluation tests for the stain resistance (initial and 2 months later), tackiness, and repellency of the coating films, and the GDS measurement were performed while preparing two evaluation test color cards in the following manner in the case of preheating an aqueous base coat (uncured) and in the case of thermally curing an aqueous base coat.

- Production of evaluation test color card

Electron GT-10 (produced by Kansai Paint Co., Ltd., trade name, a thermosetting epoxy resin cationic electrodeposition paint) was applied by electrodeposition to a dull steel plate (thickness: 0.8 mm) treated with zinc phosphate to a cured film thickness of 20 μm, and thermally cured at 170°C for 30 minutes. Then, Amilac TP-67-P (produced by Kansai Paint Co., Ltd., trade name, a polyester/melamine resin intermediate paint for automobiles, coating color: dark gray) was applied by air spray to a film thickness of 35 μm, and thermally cured at 140°C for 30 minutes. Subsequently, two intermediate color cards mentioned above were prepared, and an aqueous base coat "WBC713T" (trade name, produced by Kansai Paint Co., Ltd., an acrylic/melamine resin aqueous metallic color base coat paint) was applied to

the intermediate coating film to a cured film thickness of 15 μm. One of them was preheated at 80°C for 5 minutes, and the other was thermally cured at 140°C for 30 minutes. The paints obtained in the Examples and Comparative Examples were each applied to the two color cards to a cured film thickness of 35 μm, allowed to stand at room temperature for 7 minutes, and then thermally cured at 140°C for 30 minutes.

The paints (Y-20) to (Y-45) were applied within 1 hour after mixing the components (I) and (II). Further, the paint (Y-13) was applied within 1 hour after production.

4. Evaluation test methods

- Storage stability of paint (Y)

Paints were prepared by removing the curing agent (Sumidur N3300 or Cymel 370) from the paints (Y-1) to (Y-19), and the viscosity was measured at 20°C with a Ford Cup No. 4. Subsequently, the prepared paints were stored in an environment at a temperature of 20°C and a humidity of 60% for 72 hours, and the viscosity and state of each paint were evaluated according to the following criteria.

S: The viscosity at 20°C with a Ford Cup No. 4 after the storage test was less than +20 seconds of the initial viscosity, and there was no significant change.
A: The viscosity at 20°C with a Ford Cup No. 4 after the storage test was less than +30 seconds of the initial viscosity.
B: The viscosity at 20°C with a Ford Cup No. 4 after the storage test was more than +30 seconds of the initial viscosity, but no gelation occurred.
C: The paint was gelled after the storage test, and the viscosity could not be measured.

- Storage stability of components (I) and (II)

The paints (Y-20) to (Y-45) and (Y-13) were stored in an environment at a temperature of 20°C and a humidity of 60% for 72 hours, and the state of each paint was evaluated according to the following criteria. Regarding the paints (Y-20) to (Y-45), the components (I) and (II) were not mixed, and each component was observed.

S: The viscosity at 20°C with a Ford Cup No. 4 after the storage test was less than +20 seconds of the initial viscosity, and there was no significant change.
A: The viscosity at 20°C with a Ford Cup No. 4 after the storage test was less than +30 seconds of the initial viscosity.
B: The viscosity at 20°C with a Ford Cup No. 4 after the storage test was more than +30 seconds of the initial viscosity, but no gelation occurred.
C: The paint was gelled after the storage test, and the viscosity could not be measured.

- Stain resistance (initial)

The coating film (within 2 hours after baking and curing) was stained by coloring with spotting using an oil-based black paint marker. Subsequently, the stained portion was wiped with a dry Kimwipe (trade name), and observed to evaluate according to the following criteria.

The paint compositions of Examples 22 to 39 and Comparative Examples 9 to 17 were tested using two color cards in the case of preheating an aqueous base coat (uncured) and in the case of thermally curing an aqueous base coat; however, there was no difference.

S: There was no stain or stain marks.
A: There was no stain (color), but stain marks (e.g., lines, blotches, and spot edges) were slightly observed.
B: Stain (color) slightly remained.
C: Stain significantly remained.

- Stain resistance (2 months later)

The coating film (allowed to stand in the room for 2 months after baking and curing) was stained by coloring with spotting using an oil-based black paint marker. Subsequently, the stained portion was wiped with a dry Kimwipe (trade name), and observed to evaluate according to the following criteria.

The paint compositions of Examples 22 to 39 and Comparative Examples 9 to 17 were tested using two color cards in the case of preheating an aqueous base coat (uncured) and in the case of thermally curing an aqueous base coat; however, there was no difference.

S: There was no stain or stain marks.
A: There was no stain (color), but stain marks (e.g., lines, blotches, and spot edges) were slightly observed.
B: Stain (color) slightly remained.
C: Stain significantly remained.

- Tackiness

After the color card after baking and curing was allowed to stand at 20°C for 24 hours, a thumb was pressed on the coating surface and twisted, and the tackiness of the coating surface was evaluated according to the following criteria. The paint compositions of Examples 22 to 39 and Comparative Examples 9 to 17 were tested using two color cards in the case of preheating an aqueous base coat (uncured) and in the case of thermally curing an aqueous base coat; however, there was no difference.

S: No tackiness was confirmed at all.
A: Tackiness was slightly confirmed.
B: There was tackiness with a fingerprint mark.
C: The coating film was significantly tacky.

- Repellency

The surface of the coating film after baking and curing was visually observed, and the presence of repellants on the coating surface was evaluated according to the following criteria. The paint compositions of Examples 22 to 39 and Comparative Examples 9 to 17 were tested using two color cards in the case of preheating an aqueous base coat (uncured) and in the case of thermally curing an aqueous base coat; however, there was no difference.

S: There were no repellants or dents.
A: There were no repellants, but dents were slightly observed.
B: Repellants were slightly observed.
C: Many repellants were observed.

## Claims

**1.** A coating method comprising sequentially applying a paint (X) and a paint (Y) to a substrate, and thermally curing two layers simultaneously,
wherein
the paint (X) contains a binder (XA),
the paint (Y) contains a binder (YA) and an alkoxysilyl-containing organopolysiloxane (YB),
the alkoxysilyl-containing organopolysiloxane (YB) has a solids content of 0.01 to 20 mass% based on the resin solids content of the binder (YA), and
at least one of the paint (X) and the paint (Y) contains a catalyst (C) that promotes hydrolysis condensation of alkoxysilyl.

**2.** The coating method according to claim 1, wherein the paint (X) contains the catalyst (C) that promotes hydrolysis condensation of alkoxysilyl.

**3.** The coating method according to claim 1, wherein the paint (Y) contains the catalyst (C) that promotes hydrolysis condensation of alkoxysilyl.

**4.** The coating method according to any one of claims 1 to 3, wherein the binder (XA) contains a hydroxy-containing resin (XA-1) and/or a curing agent (XA-2).

**5.** The coating method according to any one of claims 1 to 4, wherein the binder (YA) contains a hydroxy-containing resin (YA-1) and a curing agent (YA-2).

**6.** The coating method according to any one of claims 2 to 5, wherein the catalyst (C) contains at least one phosphate compound, and the at least one phosphate compound has a number average molecular weight of 2000 or less.

7. The coating method according to any one of claims 1 to 6, wherein the alkoxysilyl-containing organopolysiloxane (YB) has a number average molecular weight of 500 to 2000.

8. The coating method according to any one of claims 5 to 7, wherein the hydroxy-containing resin (YA-1) contains at least one silyl-containing acrylic resin (YA-1-3).

9. The coating method according to claim 5, wherein the binder (YA) contains the curing agent (YA-2), and the curing agent (YA-2) is at least one member selected from the group consisting of a melamine resin, a polyisocyanate compound, and a blocked polyisocyanate compound.

10. The coating method according to any one of claims 1 to 9, wherein a coating film (Y*) of the paint (Y) has a cured film thickness of 10 μm or more, and a maximum spectral peak value of silicon (PS) and a maximum spectral peak value of carbon (PC), both present within 1 μm from a surface in contact with air, obtained by high-frequency glow discharge optical emission spectroscopy for element concentration analysis of the coating film (Y*) in the depth direction, satisfy the following formula:

$$PS/(PS + PC) \geq 0.3.$$

11. A multi-component paint composition comprising a polysiloxane-containing component (I) and a catalyst-containing component (II),
wherein
the polysiloxane-containing component (I) or the catalyst-containing component (II), or both, contain a binder (YA),
the polysiloxane-containing component (I) contains an alkoxysilyl-containing organopolysiloxane (YB),
the catalyst-containing component (II) contains a catalyst (YC) that promotes hydrolysis condensation of alkoxysilyl, and
the alkoxysilyl-containing organopolysiloxane (YB) has a solids content of 0.01 to 20 mass% based on the resin solids content of the binder (YA).

12. The paint composition according to claim 11,
wherein the binder (YA) contains a hydroxy-containing resin (YA-1) and a curing agent (YA-2), and
wherein the paint composition comprises the following combination (1) or (2):

(1) the polysiloxane-containing component (I) containing the hydroxy-containing resin (YA-1), and the catalyst-containing component (II) containing the curing agent (YA-2); or
(2) the polysiloxane-containing component (I) containing the curing agent (YA-2), and the catalyst-containing component (II) containing the hydroxy-containing resin (YA-1).

13. The paint composition according to claim 11 or 12, wherein the alkoxysilyl-containing organopolysiloxane (YB) has a number average molecular weight of 500 to 2000.

14. The paint composition according to any one of claims 11 to 13, wherein the hydroxy-containing resin (YA-1) contains a silyl-containing acrylic resin (YA-1-3).

15. The paint composition according to any one of claims 12 to 14, wherein the curing agent (YA-2) is a polyisocyanate compound.

16. The paint composition according to any one of claims 11 to 15, wherein a dry coating film obtained by applying the paint composition has a film thickness of 10 μm or more, and a maximum spectral peak value of silicon (PS) and a maximum spectral peak value of carbon (PC), both present within 1 μm from a surface in contact with air, obtained by high-frequency glow discharge optical emission spectroscopy for element concentration analysis of the coating film in the depth direction, satisfy the following formula:

$$PS/(PS + PC) \geq 0.3.$$

17. The paint composition according to any one of claims 11 to 16, wherein a coating film obtained by a method comprising applying the paint composition to a polypropylene plate, and peeling the resulting film off from the polypropylene

plate after thermal curing at 140°C for 30 minutes has water and paraffin contact angles (front surface, back surface) that satisfy all of the following (1) to (4):

(1) a water contact angle of a front surface of the coating film ≥ 90°,
(2) a water contact angle of the front surface of the coating film > a water contact angle of a back surface of the coating film + 10°,
(3) a paraffin contact angle of the front surface of the coating film ≥ 40°, and
(4) a paraffin contact angle of the front surface of the coating film > a paraffin contact angle of the back surface of the coating film + 10°,

wherein a surface on the atmosphere side serves as the front surface, and a surface on the polypropylene plate side serves as the back surface.

**18.** The paint composition according to any one of claims 11 to 17, having a toluene extraction rate of 50% or less, the toluene extraction rate being measured as follows:
the paint composition is applied to a tin plate degreased in advance to a cured film thickness of 35 μm, the resulting product is allowed to stand at room temperature for 7 minutes and then heated at 140°C for 30 minutes to obtain a dry coating film, a 5-cm × 5-cm surface of the obtained dry coating film is scraped off in an amount of about 0.05 g with a razor blade and placed in a 10-cc mayonnaise bottle, 2.5 ml of toluene is added, the resulting mixture is allowed to stand for 2 hours, 1 ml of the supernatant is weighed, the entire amount of the weighed supernatant is impregnated into filter paper to perform X-ray fluorescence analysis, and Si content is quantified from a calibration curve measured in advance,
wherein

$$\text{toluene extraction rate (\%)} = (P_1 \times Q)/(P_2 \times R \times S) \times 100,$$

wherein $P_1$ represents a volume (ml) of toluene used for extracting the Si component from the coating film,
Q represents the Si content (g) quantified by X-ray fluorescence analysis,
$P_2$ represents a volume (ml) of toluene used in X-ray fluorescence analysis,
R represents a solids content (mass%) of the alkoxysilyl-containing organopolysiloxane (YB) based on the resin solids content of the binder (YA), and
S represents a mass (g) of the scraped coating film.

**19.** A coating method comprising applying the paint composition of any one of claims 11 to 18 to a substrate after mixing the polysiloxane component (I) and the catalyst component (II) .

## INTERNATIONAL SEARCH REPORT

International application No.
PCT/JP2019/007606

A. CLASSIFICATION OF SUBJECT MATTER
Int.Cl. B05D1/36(2006.01)i, B05D7/24(2006.01)i

According to International Patent Classification (IPC) or to both national classification and IPC

B. FIELDS SEARCHED

Minimum documentation searched (classification system followed by classification symbols)
Int.Cl. B05D1/36, B05D7/24

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 11-57608 A (KANSAI PAINT CO., LTD.) 02 March 1999, claims 1, 5, paragraphs [0043], [0051]-[0062], [0073] (Family: none) | 1-5,7,9-12, 15-19<br>8,14<br>6 |
| Y | JP 7-331136 A (KANEGAFUCHI CHEM IND CO., LTD.) 19 December 1995, claims 1, 5, paragraphs [0011], [0012] (Family: none) | 8,14 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 May 2019 (17.05.2019) | 28 May 2019 (28.05.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/007606

C (Continuation). DOCUMENTS CONSIDERED TO BE RELEVANT

| Category* | Citation of document, with indication, where appropriate, of the relevant passages | Relevant to claim No. |
|---|---|---|
| X<br>Y<br>A | JP 11-76933 A (KANSAI PAINT CO., LTD.) 23 March 1999, claims 1, 4, paragraphs [0051]-[0066] (Family: none) | 11-13,15-19<br>14<br>1-10 |
| A | JP 2008-69336 A (KANSAI PAINT CO., LTD.) 27 March 2008, claims, paragraph [0001] (Family: none) | 1-19 |
| A | JP 2008-81719 A (KANSAI PAINT CO., LTD.) 10 April 2008, claims, paragraph [0001] (Family: none) | 1-19 |
| A | JP 2014-12748 A (KANSAI PAINT CO., LTD.) 23 January 2014, claims, paragraph [0001] (Family: none) | 1-19 |
| A | WO 2012/063756 A1 (KANSAI PAINT CO., LTD.) 18 May 2012, claims, paragraph [0001] (Family: none) | 1-19 |
| A | WO 2016/010107 A1 (NIPPON STEEL & SUMITOMO METAL CORPORATION) 21 January 2016, claims 1-4, paragraphs [0001]-[0006] & CN 106660321 A | 1-19 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006001510 A
- JP H1036771 A